# EUROPEAN PATENT APPLICATION

(11) **EP 4 697 081 A1**
(43) Date of publication of application: **18.02.2026**
(21) Application number: 24839872.9
(22) Date of filing: 29.04.2024
(51) Int. Cl.: G02B 27/01

(54) **ELECTRONIC DEVICE INCLUDING STRUCTURE FOR ADJUSTING DISTANCE BETWEEN HOUSINGS**

(30) Priority: 07.07.2023 KR 20230088704; 07.08.2023 KR 20230103180
(71) Applicant: Samsung Electronics Co., Ltd., Suwon-si, Gyeonggi-do 16677 (KR)
(72) Inventor: SHIM, Heebo, Suwon-si Gyeonggi-do 16677 (KR); KIM, Gyeongtae, Suwon-si Gyeonggi-do 16677 (KR); SEOK, Sangyoup, Suwon-si Gyeonggi-do 16677 (KR); LEE, Dongoh, Suwon-si Gyeonggi-do 16677 (KR); LEE, Seunghoon, Suwon-si Gyeonggi-do 16677 (KR); LEE, Changmin, Suwon-si Gyeonggi-do 16677 (KR)
(74) Representative: Appleyard Lees IP LLP
(86) International application number: PCT/KR2024/005798
(87) International publication number: WO 2025/014055

(57) **Abstract**

An electronic device is provided. The electronic device comprises: a first housing; a second housing; moving members; a rotating member for adjusting the distance between the first housing and the second housing; an adjusting member including a first coupling part; a flange part; a first locking structure including a first locking part engaged with the first coupling part, and a second locking part that can move together with the first locking part; and a second locking structure including a plurality of first locking protrusions engaged with the second locking part, wherein the adjusting member changes the distance from a first distance to a second distance by rotating in a first rotation direction during a first state, changes the state to a second state by rotating relative to the first locking structure for a designated angle in a second rotation direction, and changes the distance from the second distance to the first distance by rotating in the second rotation direction during the second state.

## Description

### [Technical Field]

The present disclosure relates to an electronic device including a structure for adjusting a distance between housings.

### [Background Art]

An electronic device may be used in various environments. For example, the electronic device may include a wearable device used in a state of being worn by a user. In a case of the electronic device worn by the user, the electronic device may include a structure for having a shape corresponding to a part of a body of the user so that it may be worn by users having another body shape.

### [Disclosure]

### [Technical Solution]

An electronic device is provided. According to an embodiment, the electronic device may include a first housing. According to an embodiment, the electronic device may include a second housing. According to an embodiment, the electronic device may include a plurality of moving members movably coupling the first housing to the second housing. According to an embodiment, the electronic device may include a rotating member engaged with each of the plurality of moving members and configured to adjust a distance between the first housing and the second housing by rotating relative to the second housing. According to an embodiment, the electronic device may include an adjusting member including a first coupling part and rotatable in conjunction with the rotating member in a first rotational direction and a second rotational direction opposite to the first rotational direction. According to an embodiment, the electronic device may include a first locking structure rotatable in conjunction with the adjusting member, the first locking structure including a flange part disposed between the adjusting member and the rotating member, a first locking part, configured to be engaged with the first coupling part, movable with respect to the flange part, and a second locking part movable in conjunction with the first locking part. According to an embodiment, the electronic device may include a second locking structure fastened in the second housing and including a plurality of first locking protrusions configured to be engaged with the second locking part. According to an embodiment, the adjusting member may be configured to change, when a state of the first locking structure is a first state in which the second locking part is engaged with the plurality of first locking protrusions, the distance from a first distance to a second distance by rotating in the first rotational direction with the first locking structure and the rotating member. According to an embodiment, the adjusting member may be configured to change the state (of the first locking structure) from the first state to a second state in which an engagement between the second locking part and the plurality of first locking protrusions is released, by rotating relatively in the second rotational direction to the first locking structure for a designated angle so that the first locking part moves relatively to the first coupling part. According to an embodiment, the adjusting member may be configured to change the distance, when the state is the second state, from the second distance to the first distance, by rotating in the second rotational direction with the rotating member.

A wearable device is provided. According to an embodiment, the wearable device may include a first housing. According to an embodiment, the wearable device may include a second housing. According to an embodiment, the wearable device may include a plurality of moving members movably coupling the first housing to the second housing. According to an embodiment, the wearable device may include a rotating member engaged with each of the plurality of moving members and configured to adjust a distance between the first housing and the second housing by rotating relative to the second housing. According to an embodiment, the wearable device may include an adjusting member including a first coupling part and rotatable in conjunction with the rotating member in a first rotational direction and a second rotational direction opposite to the first rotational direction. According to an embodiment, the wearable device may include a first locking structure rotatable in conjunction with the adjusting member and including a flange part disposed between the adjusting member and the rotating member, a first locking part, configured to be engaged with the first coupling part, movable with respect to the flange part, and a second locking part movable in conjunction with the first locking part. According to an embodiment, the wearable device may include the second locking structure including a plurality of first locking protrusions configured to be engaged with the second locking part and fastened in the second housing. According to an embodiment, the adjusting member may be configured to change, when a state of the first locking structure is a first state in which the second locking part is positioned in a plurality of first locking grooves, the distance from a first distance to a second distance by rotating in the first rotational direction with the first locking structure and the rotating member. According to an embodiment, the adjusting member may be configured to change the state from the first state to a second state in which the second locking part is positioned outside the plurality of first locking grooves, by rotating in the second rotational direction to the first locking structure for a designated angle so that the first locking part moves relatively to the first coupling part. According to an embodiment, the adjusting member may be configured to change the distance, when the state is the second state, from the second distance to the first distance, by rotating in the second rotational direction with the rotating member.

### [Description of the Drawings]

FIG. 1 is a block diagram of an electronic device within a network environment according to various embodiments.
FIG. 2A is a perspective view of an exemplary electronic device according to an embodiment.
FIG. 2B is a perspective view of an exemplary electronic device according to an embodiment.
FIG. 2C illustrates a state in which an exemplary electronic device according to an embodiment is worn by a user.
FIG. 3 is an exploded perspective view of an exemplary electronic device according to an embodiment.
FIG. 4A indicates an example that a distance between an exemplary first housing and second housing according to an embodiment is adjusted.
FIG. 4B is a perspective view illustrating a first adjusting module of an exemplary electronic device according to an embodiment.
FIG. 4C is a top view illustrating a first adjusting module of an exemplary electronic device according to an embodiment.
FIG. 5A is an exploded perspective view of a first adjusting module of an exemplary electronic device according to an embodiment.
FIG. 5B is a cross-sectional view illustrating an example in which a first adjusting module of an exemplary electronic device according to an embodiment is cut along line A-A' of FIG. 4C.
FIG. 6A is a perspective view illustrating an adjusting member of an exemplary first adjusting module and an exemplary first locking structure according to an embodiment.
FIG. 6B is a perspective view illustrating a state in which a fastening member is omitted from an adjusting member of an exemplary first adjusting module and an exemplary first locking structure according to an embodiment.
FIG. 6C is a perspective view illustrating an exemplary adjusting member according to an embodiment.
FIG. 6D is a cross-sectional view illustrating an example in which an exemplary adjusting member and first locking structure according to an embodiment are cut along line B-B' of FIG. 6B.
FIG. 6E is a cross-sectional view illustrating an example in which an exemplary adjusting member and first locking structure according to an embodiment are cut along line C-C' of FIG. 6B.
FIG. 7A is a top view of an exemplary first locking structure and second locking structure according to an embodiment.
FIG. 7B is a cross-sectional view illustrating an example in which an exemplary first locking structure and second locking structure according to an embodiment are cut along line D-D' of FIG. 7A.
FIG. 7C is a top view indicating a relationship between a second locking part of an exemplary first locking structure and an exemplary second locking structure according to an embodiment.
FIG. 8A is a perspective view illustrating a rotating member and a third locking structure according to an embodiment.
FIG. 8B is an exploded perspective view illustrating a rotating member and a third locking structure according to an embodiment.
FIG. 8C is a perspective view illustrating an exemplary button according to an embodiment.
FIG. 8D is an exploded perspective view of an exemplary button according to an embodiment.
FIG. 8E is a perspective view illustrating an exemplary first locking structure, third locking structure, and button according to an embodiment.
FIG. 9A is a perspective view of an exemplary adjusting member and button according to an embodiment.
FIG. 9B is a cross-sectional view illustrating an example in which an exemplary adjusting member and button according to an embodiment are cut along line E-E' of FIG. 9A.
FIG. 10A is a top view indicating a relationship between a first locking structure and an adjusting member when a state of the exemplary first locking structure according to an embodiment is a first state.
FIG. 10B is a top view indicating a relationship between a first locking structure and a second locking structure when a state of the exemplary first locking structure according to an embodiment is a first state.
FIG. 10C is a top view indicating a relationship between an adjusting member and a button when a state of an exemplary first locking structure according to an embodiment is a first state.
FIG. 10D is a top view of a first adjusting module when a state of an exemplary first locking structure according to an embodiment is a first state.
FIG. 11A is a top view indicating a relationship between a first locking structure and an adjusting member while a state of the exemplary first locking structure according to an embodiment is changed from a first state to a second state.
FIG. 11B is a top view indicating a relationship between a first locking structure and a second locking structure while a state of the exemplary first locking structure according to an embodiment is changed from a first state to a second state.
FIG. 11C is a top view indicating a relationship between an adjusting member and a button while a state of an exemplary first locking structure according to an embodiment is changed from a first state to a second state.
FIG. 12A is a top view indicating a relationship between a first locking structure and an adjusting member when a state of the exemplary first locking structure according to an embodiment is a second state.
FIG. 12B is a top view indicating a relationship between a first locking structure and a second locking structure when a state of the exemplary first locking structure according to an embodiment is a second state.
FIG. 12C is a top view indicating a relationship between an adjusting member and a button when a state of an exemplary first locking structure according to an embodiment is a second state.
FIG. 12D is a top view of a first adjusting module when a state of an exemplary first locking structure according to an embodiment is a second state.
FIG. 13A is a cross-sectional view illustrating an example in which a first adjusting module according to an embodiment is cut along line F-F' of FIG. 12D.
FIG. 13B is a cross-sectional view illustrating a released state of a first adjusting module according to an embodiment.

### [Mode for Invention]

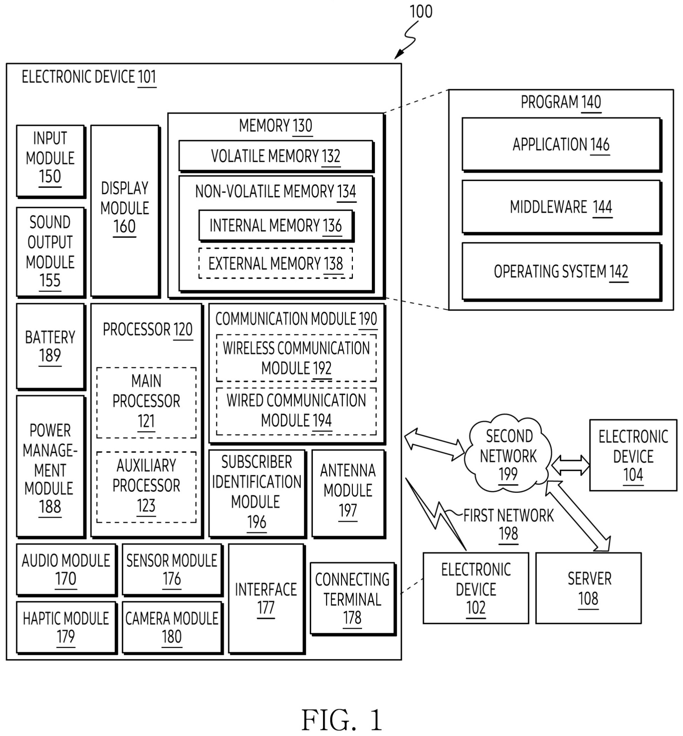

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

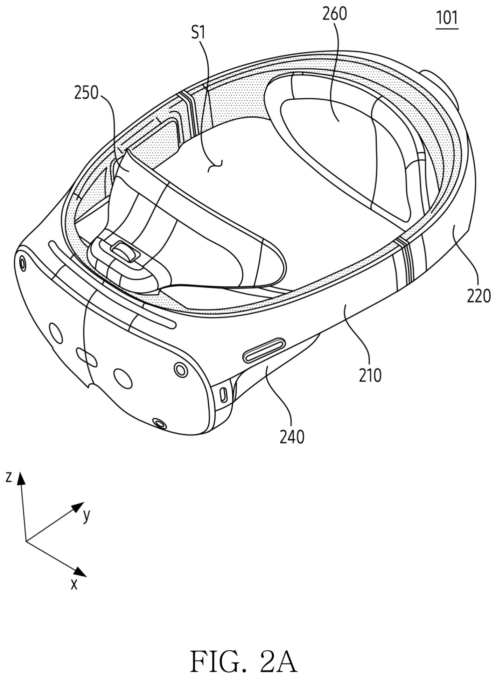

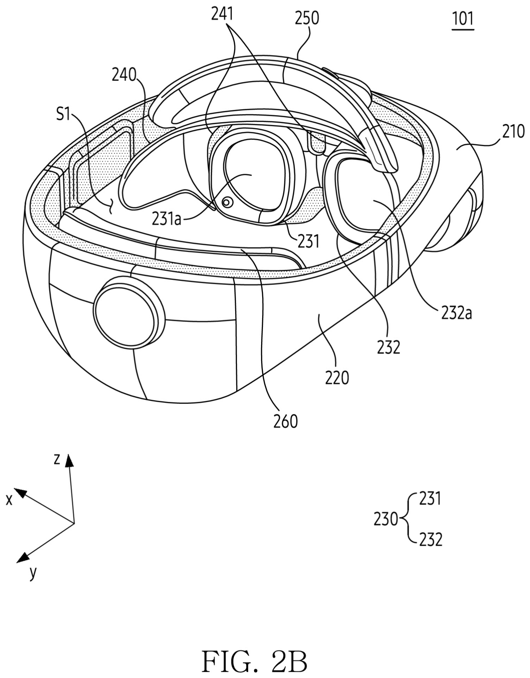

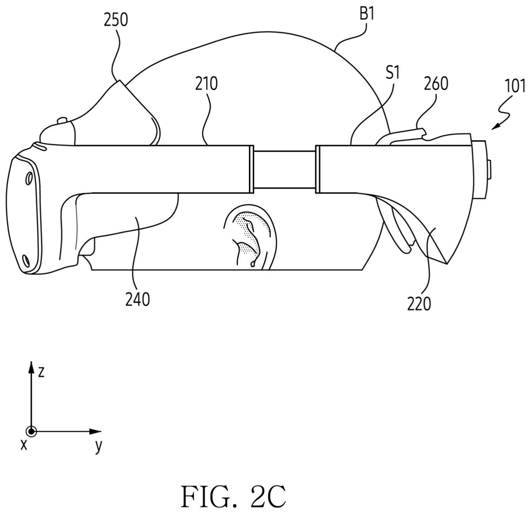

FIG. 2A is a perspective view of an exemplary electronic device according to an embodiment, and FIG. 2B is a perspective view of an exemplary electronic device according to an embodiment. FIG. 2C illustrates a state in which an exemplary electronic device according to an embodiment is worn by a user.

Referring to FIGS. 2A, 2B, and 2C, according to an embodiment, the electronic device 101 may include a first housing 210, a second housing 220, a plurality of lens supports 230, a cover 240, a first pad 250, and/or a second pad 260. According to an embodiment, the electronic device 101 may be referred to as a wearable device worn on a part b1 of a user's body. For example, the electronic device 101 may be worn on the user's head.

According to an embodiment, the electronic device 101 may be configured to provide a user with augmented reality (AR), virtual reality (VR), or mixed reality (MR) in which the AR and the VR are mixed. For example, the electronic device 101 may be configured to provide virtual reality (or virtual space) to the user, based on receiving data about an image from the outside of the electronic device 101. The virtual reality may be represented based on two dimensions and/or three dimensions. For example, the image provided by the electronic device 101 may include a still image and/or video for implementing virtual reality. For example, the electronic device 101 may be configured to provide AR to the user, by superimposing a virtual object on a real image representing an external environment of the electronic device 101. The real image may correspond to the external environment. The virtual object may include at least one of text and an image corresponding to various information related to an object included in the real image. However, the present disclosure is not limited thereto, and the virtual object may include at least one of text and an image corresponding to various information related to another object distinguished from the object included in the real image. For example, the electronic device 101 may be referred to as at least one of a virtual reality (VR) device and a mixed reality (MR) device.

According to an embodiment, a first housing 210 may form (or define) a portion of an outer surface of the electronic device 101. The first housing 210 may form or define a portion of a space in which various components of the electronic device 101 may be disposed. The first housing 210 may support various components of the electronic device 101. For example, the plurality of lens supports 230, the cover 240, and/or the first pad 250 may be coupled to the first housing 210. The first housing 210 may surround (or cover) a part b1 of a body of a user in a state in which the electronic device 101 is worn by the user. For example, the first housing 210 may at least partially accommodate the part b1 of the body of the user in the state in which the electronic device 101 is worn by the user. For example, the first housing 210 may be in contact with the part b1 of the body of the user in the state in which the electronic device 101 is worn by the user, but is not limited thereto. For example, the first housing 210 may be referred to as a main housing. For example, the first housing 210 may be referred to as a frame because it provides an overall framework of the electronic device 101.

According to an embodiment, a second housing 220 may form or define another portion of the outer surface of the electronic device 101. The second housing 220 may form or define another portion of the space in which various components of the electronic device 101 may be disposed. The second housing 220 may support various components of the electronic device 101. For example, the second housing 220 may support the second pad 260. For example, the second pad 260 may be disposed on the second housing 220. The second housing 220 may surround (or cover) the part b1 of the body of the user in a state in which the electronic device 101 is worn by the user. For example, the second housing 220 may at least partially accommodate the part b1 of the body of the user in the state in which the electronic device 101 is worn by the user. For example, the second housing 220 may be in contact with the part b1 of the body of the user in the state in which the electronic device 101 is worn by the user, but is not limited thereto. The second housing 220 may be movable with respect to the first housing 210. For example, the second housing 220 may be movable with respect to the first housing 210 so that the part b1 of the body of the user is accommodated in a space s1 between the first housing 210 and the second housing 220. For example, the second housing 220 may be movable with respect to the first housing 210 so as to approach the first housing 210 or move away from the first housing 210. As the second housing 220 is movable with respect to the first housing 210, a size of the space s1 between the first housing 210 and the second housing 220 may be adjusted (or changed) to correspond to a size of the part b1 of the body of the user. For example, the second housing 220 may be referred to as a sub-housing. For example, the second housing 220 may be referred to as a band housing.

According to an embodiment, each of the plurality of lens supports 230 may correspond to eyes of a user of the electronic device 101. Each of the plurality of lens supports 230 may face the eyes of the user in the state in which the electronic device 101 is worn by the user. Each of the plurality of lens supports 230 may be coupled to the first housing 210. For example, a portion of each of the plurality of lens supports 230 may be disposed (or accommodated) in the inside the first housing 210. For example, another portion of each of the plurality of lens supports 230 may protrude to the outside of the first housing 210. The plurality of lens supports 230 may include a first lens support 231 and a second lens support 232.

According to an embodiment, the first lens support 231 may be movable with respect to the first housing 210 to face the eyes of the user. For example, the first lens support 231 may be movable with respect to the first housing 210 so as to approach the second lens support 232 or move away from the second lens support 232. The first lens support 231 may be coupled to a first lens 231a. The first lens 231a may refract (or distort) light emitted from at least one display of the electronic device 101 so that the electronic device 101 may provide virtual reality. The first lens 231a may be exposed to the outside of the first housing 210. The first lens 231a may be disposed outside the first housing 210.

According to an embodiment, the second lens support 232 may be movable with respect to the first housing 210 to face the eyes of the user. For example, the second lens support 232 may be movable with respect to the first housing 210 so as to approach the first lens support 231 or move away from the first lens support 231. As the first lens support 231 and the second lens support 232 are movable with respect to each other, a distance between a first lens 231a and a second lens 232a may be adjusted to correspond to an inter pupillary distance (IPD) of the user. The second lens support 232 may be coupled to the second lens 232a. The second lens 232a may refract (or distort) light emitted from at least one display of the electronic device 101 so that the electronic device 101 may provide virtual reality. The second lens 232a may be exposed to the outside of the first housing 210. The second lens 232a may be disposed outside the first housing 210.

According to an embodiment, the cover 240 may decrease (or suppress) light passing through the first lens 231a and the second lens 232a from being dispersed to the outside of the cover 240 in a state in which the electronic device 101 is worn by the user. As the cover 240 decreases transmission of the light passing through the first lens 231a and the second lens 232a to the outside of the cover 240, an environment in which the user of the electronic device 101 may be immersed in virtual reality may be provided. The cover 240 may cover (or surround) the part b1 of the body of the user in the state in which the electronic device 101 is worn by the user. For example, the cover 240 may be in contact with the part b1 of the body of the user in the state in which the electronic device 101 is worn by the user. The cover 240 may be disposed on the first housing 210. For example, the cover 240 may be disposed on a surface of the first housing 210 facing the part b1 of the body of the user in the state in which the electronic device 101 is worn by the user. The cover 240 may be penetrated by the first lens support 231 and the second lens support 232. For example, the cover 240 may include a plurality of holes 241 accommodating each of the first lens support 231 and the second lens support 232. For example, the cover 240 may be referred to as a face cover because it covers a face of the user while the electronic device 101 is worn by the user.

According to an embodiment, the first pad 250 may support the electronic device 101 while the electronic device 101 is worn by the user. The first pad 250 may maintain a position of the electronic device 101 with respect to the part b1 of the body of the user while the electronic device 101 is worn by the user. For example, the first pad 250 may be in contact with a forehead of the user in a state in which the electronic device 101 is worn by the user. The first pad 250 may be coupled to the first housing 210. The first pad 250 may be disposed on the first housing 210. According to an embodiment, the first pad 250 may be movable with respect to the first housing 210. For example, the first pad 250 may be rotatable (or tiltable) with respect to the first housing 210. As the first pad 250 is movable with respect to the first housing 210, a posture (or an angle) of the first pad 250 with respect to the first housing 210 may be adjusted (or changed). As the posture of the first pad 250 with respect to the first housing 210 is changed, the first pad 250 may be stably in contact with the forehead of the user. For example, the first pad 250 may be referred to as a front pad (or a front cushion) because it supports the forehead of the user while the electronic device 101 is worn by the user.

According to an embodiment, the second pad 260 may support the electronic device 101 while the electronic device 101 is worn by the user. The second pad 260 may maintain a position of the electronic device 101 with respect to the part b1 of the body of the user while the electronic device 101 is worn by the user. For example, the second pad 260 may be in contact with a back of a head of the user in a state in which the electronic device 101 is worn by the user. The second pad 260 may be coupled to the second housing 220. The second pad 260 may be disposed on the second housing 220. For example, the second pad 260 may be disposed on a surface of the second housing 220 facing the part b1 of the body of the user in a state in which the electronic device 101 is worn by the user. According to an embodiment, the second pad 260 may be movable with respect to the second housing 220. For example, the second pad 260 may be rotatable (or tiltable) with respect to the second housing 220. As the second pad 260 is movable with respect to the second housing 220, a posture (or an angle) of the second pad 260 with respect to the second housing 220 may be adjusted (or changed). As the posture of the second pad 260 with respect to the second housing 220 is changed, the second pad 260 may be stably in contact with the back of the head of the user. For example, the second pad 260 may be referred to as a rear pad (or a rear cushion) because it supports the back of the head of the user while the electronic device 101 is worn by the user.

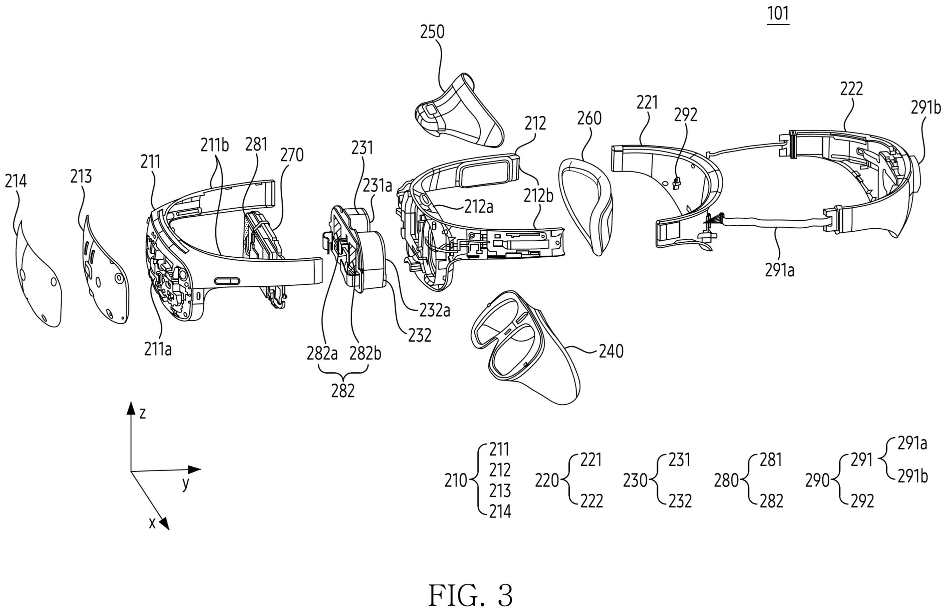

FIG. 3 is an exploded perspective view of an exemplary electronic device according to an embodiment.

Referring to FIG. 3, according to an embodiment, an electronic device 101 may further include a bracket 270, an electronic component 280, and/or a plurality of adjusting modules 290.

According to an embodiment, the bracket 270 may support a component disposed in a first housing 210. For example, the bracket 270 may support a printed circuit board 281. The bracket 270 may be disposed in the first housing 210. For example, the bracket 270 may be surrounded by the first housing 210.

According to an embodiment, the electronic component 280 may implement various functions of the electronic device 101. For example, the electronic component 280 may include the printed circuit board 281 and at least one display 282. However, it is not limited thereto. For example, the electronic component 280 may include various electronic components in addition to the above-described example.

According to an embodiment, the printed circuit board 281 may form (or establish) an electrical connection between the electronic components in the electronic device 101. The printed circuit board 281 may support at least some of the electronic components in the electronic device 101. For example, the printed circuit board 281 may support a processor (e.g., the processor 120 of FIG. 1) of the electronic device 101. The processor 120 may be disposed on the printed circuit board 281. The printed circuit board 281 may be disposed in the first housing 210. The printed circuit board 281 may be disposed on the bracket 270. For example, the printed circuit board 281 may be disposed on one surface of the bracket 270.

According to an embodiment, the at least one display 282 may be configured to provide visual content. The at least one display 282 may be disposed in the first housing 210. For example, the at least one display 282 may face the other surface of the bracket 270 opposite to the one surface of the bracket 270 on which the printed circuit board 281 is disposed. According to an embodiment, the at least one display 282 may be movable with respect to the first housing 210. For example, the at least one display 282 may include a first display 282a coupled to a first lens support 231 and a second display 282b coupled to a second lens support 232. The first display 282a may be disposed on the first lens support 231. The first display 282a may emit light toward a first lens 231a. The light emitted from the first display 282a may be transmitted to a user by passing through the first lens 231a. The second display 282b may be disposed on the second lens support 232. The second display 282b may emit light toward a second lens 232a. The light emitted from the second display 282b may be transmitted to the user by passing through the second lens 232a. However, it is not limited thereto. For example, the at least one display 282 may also include only one display fixed on the other surface of the bracket 270.

According to an embodiment, the plurality of adjusting modules 290 may include a first adjusting module 291 and a second adjusting module 292.

According to an embodiment, the first adjusting module 291 may couple a second housing 220 and the first housing 210 so that the second housing 220 is movable with respect to the first housing 210. A distance between the second housing 220 and the first housing 210 may be adjusted (changed) by the first adjusting module 291. The first adjusting module 291 may include a band 291a and a first knob 291b. The band 291a may be disposed in the first housing 210 and the second housing 220. The band 291a may extend from the second housing 220 to the first housing 210. The band 291a may be operated through the first knob 291b exposed to the outside of the second housing 220. At least a portion of the band 291a may be exposed to the outside of the electronic device 101 by movement of the second housing 220 with respect to the first housing 210, or may be covered by the first housing 210 and the second housing 220. For example, the at least a portion of the band 291a may be exposed to the outside of the electronic device 101 as the user adjusts the distance to increase the distance between the first housing 210 and the second housing 220 through the knob 291b. For example, the at least a portion of the band 291a may be covered by the first housing 210 and the second housing 220 as the user adjusts the distance to decrease the distance between the first housing 210 and the second housing 220 through the knob 291b.

According to an embodiment, the second adjusting module 292 may couple a second pad 260 to the second housing 220 so that the second pad 260 is movable with respect to the second housing 220. For example, at least a portion of the second adjusting module 292 may be exposed to the outside of the second housing 220.

According to an embodiment, the first housing 210 may include a first case 211, a second case 212, and a front panel 213, and/or a visor 214. The first case 211, the second case 212, the front panel 213, and the visor 214 may be coupled to each other. The first case 211, the second case 212, the front panel 213, and the visor 214 may form (or define) the first housing 210 by being coupled to each other.

According to an embodiment, the first case 211 may include a first support part 211a and/or at least one band part 211b.

According to an embodiment, the first support part 211a may face the printed circuit board 281. The printed circuit board 281 may be disposed on (or in) the first support part 211a. For example, the printed circuit board 281 may be disposed (or interposed) between the first support part 211a and the bracket 270. For example, a first pad 250 may be disposed on the first support part 211a.

According to an embodiment, the at least one first band part 211b may surround (or cover) a part (e.g., the part b1 of the user's body of FIG. 2C) of the user's body in a state that the electronic device 101 is worn by the user. The at least one first band part 211b may have a shape extending from the first support part 211a. For example, the at least one first band part 211b may extend in a direction away from the first support part 211a. For example, the at least one first band part 211b may include a plurality of first band parts spaced apart from each other, but is not limited thereto.

According to an embodiment, the second case 212 may include a second support part 212a and/or at least one second band part 212b.

According to an embodiment, the second support part 212a may be coupled to the first support part 211a. For example, a shape of the second support part 212a may correspond to a shape of the first support part 211a. The first support part 211a and the second support part 212a may provide a space in which components of the electronic device 101 may be disposed by being coupled to each other. For example, a portion of each of the bracket 270, the printed circuit board 281, and a plurality of lens supports 230 may be disposed between the first support part 211a and the second support part 212a. The second support part 212a may include a plurality of lens openings through which another portion of each of the plurality of lens supports 230 passes. The other portion of each of the plurality of lens supports 230 may be exposed to the outside of the first housing 210 by penetrating the plurality of lens opening. The second support part 212a may support a first cover 240. For example, the first cover 240 may be disposed on the second support part 212a.

According to an embodiment, the at least one second band part 212b may be coupled to the at least one first band part 211b. For example, a shape of the at least one second band part 212b may correspond to a shape of the at least one first band part 211b. For example, the at least one second band part 212b may include a plurality of second band parts spaced apart from each other, but is not limited thereto. A portion of the band 291a may be disposed in the at least one first band part 211b and the at least one second band part 212b. The portion of the band 291a may be covered (or surrounded) by the at least one first band part 211b and the at least one second band part 212b.

According to an embodiment, the front panel 213 may cover at least a portion of the components in the first housing 210 so that the components in the first housing 210 are not visually recognized from the outside. The front panel 213 may be disposed on the first housing 210. For example, the front panel 213 may be disposed on the first support part 211a of the first housing 210.

According to an embodiment, the visor 214 may be disposed on the first housing 210. The visor 214 may be disposed on the front panel 213. For example, at least a portion of the visor 214 may be formed of a substantially transparent or substantially translucent material so that a camera (e.g., the camera module 180 of FIG. 1) of the electronic device 101 may receive light from the outside of the electronic device 101, but is not limited thereto.

According to an embodiment, the second housing 220 may include a third case 221 and/or a fourth case 222. The third case 221 and the fourth case 222 may be coupled to each other. The third case 221 and the fourth case 222 may form (or define) the second housing 220 by being coupled to each other.

According to an embodiment, the third case 221 may face the second case 212. The third case 221 may support the second pad 260. The second pad 260 may be disposed on the third case 221. A portion of the second adjusting module 292 may protrude (or be exposed) to the outside of the third case 221.

According to an embodiment, the fourth case 222 may be coupled to the third case 221. Another portion of the band 291a may extend in the third case 221 and the fourth case 222. The knob 291b may protrude to the outside of the fourth case 222.

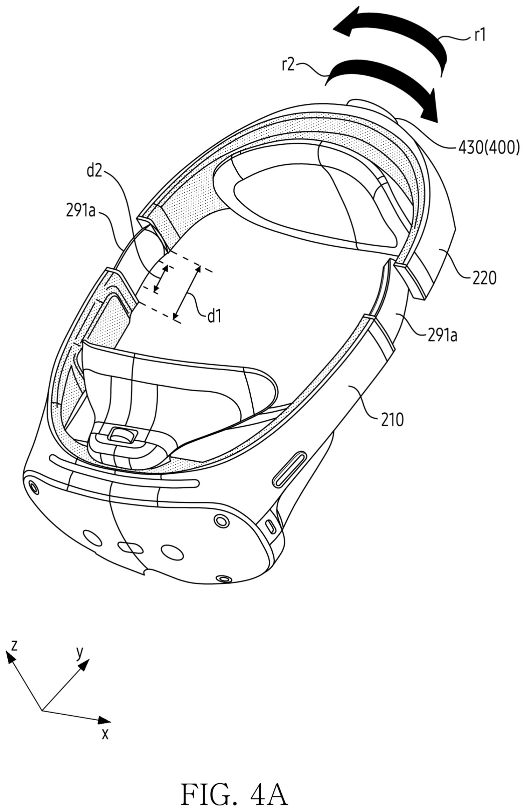

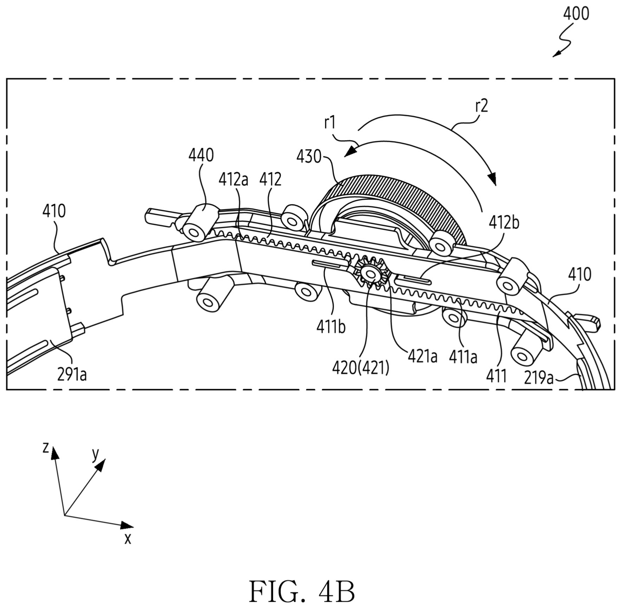

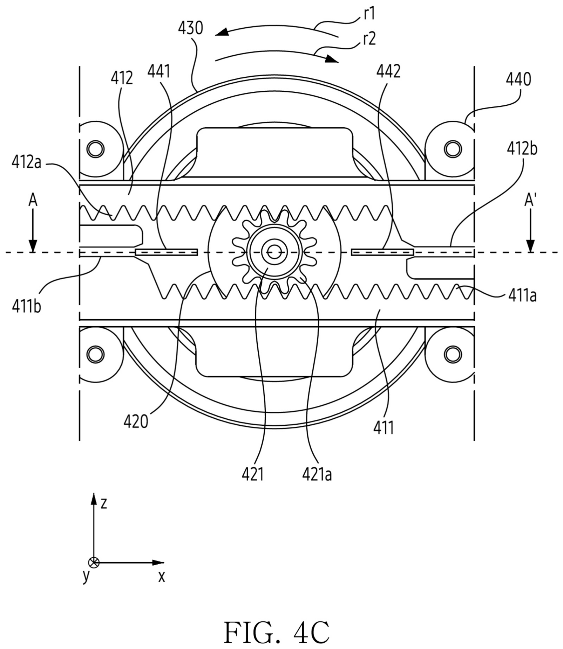

FIG. 4A indicates an example that a distance between an exemplary first housing and second housing according to an embodiment is adjusted, FIG. 4B is a perspective view illustrating a first adjusting module of an exemplary electronic device according to an embodiment, and FIG. 4C is a top view illustrating a first adjusting module of an exemplary electronic device according to an embodiment.

Referring to FIGS. 4A, 4B, and 4C, an electronic device 101 according to an embodiment may include a first housing 210, a second housing 220, and/or a first adjusting module 400 (e.g., the first adjusting module 291 of FIG. 3).

According to an embodiment, the first housing 210 may be coupled to be movable with respect to the second housing 220. For example, the first housing 210 may be coupled to be movable with respect to the second housing 220 by the first adjusting module 400. For example, the first housing 210 may be linearly movable with respect to the second housing 220. For example, the first housing 210 may be movable in a direction (e.g., a -y direction) away from the second housing 220 and/or a direction (e.g., a +y direction) close to the second housing 220. The first housing 210 may cover (or surround) a region of a body including a user's eye while the electronic device 101 is worn by the user.

According to an embodiment, the second housing 220 may be movable to the first housing 210. The second housing 220 may accommodate at least a portion of the first adjusting module 400. The second housing 220 may cover (or surround) another region of the body including the user's back of a head while the electronic device 101 is worn by the user.

According to an embodiment, the first adjusting module 400 may movably couple (or connect) the first housing 210 and the second housing 220. A distance between the first housing 210 and the second housing 220 may be changed by the first adjusting module 400. For example, as the first housing 210 moves relatively to the second housing 220, the distance between the first housing 210 and the second housing 220 may be changed. For example, as the first housing 210 moves in the direction (e.g., the +y direction) close to the second housing 220, the distance between the first housing 210 and the second housing 220 may be changed from a first distance d1 to a second distance d2. For example, as the first housing 210 moves in the direction (e.g., the -y direction) away from the second housing 220, the distance between the first housing 210 and the second housing 220 may be changed from the second distance d2 to the first distance d1. In the present disclosure, the second distance d2 may be smaller than the first distance d1, but it is for convenience of description. For example, the second distance d2 may be larger than the first distance d1. According to an embodiment, the first adjusting module 400 may include a band 291a, a plurality of moving members 410, a rotating member 420, an adjusting member 430, and/or a support bracket 440.

According to an embodiment, the band 291a may be coupled to the first housing 210 and the second housing 220. For example, a portion of the band 291a may be movable with respect to the second housing 220 in conjunction with the first housing 210, by being fastened to the first housing 210, but is not limited thereto.

According to an embodiment, the plurality of moving members 410 may guide the movement of the first housing 210 with respect to the second housing 220. The plurality of moving members 410 may movably couple the first housing 210 and the second housing 220. For example, the plurality of moving members 410 may movably couple the first housing 210 and the second housing 220 by being coupled to the band 291a. For example, the plurality of moving members 410 may be movable with respect to the second housing 220 in conjunction with the first housing 210 as the plurality of moving members 410 are coupled to the band 291a fastened to the first housing 210, but are not limited thereto. For example, the plurality of moving members 410 may be referred to as rails. According to an embodiment, the plurality of moving members 410 may include a first rack gear 411 and a second rack gear 412.

According to an embodiment, the first rack gear 411 may be engaged with the rotating member 420. The first rack gear 411 may be linearly movable by movement of the rotating member 420. For example, the first rack gear 411 may include a plurality of first rack gear teeth 411a engaged with the rotating member 420. According to an embodiment, the first rack gear 411 may include a first limiting groove 411b for limiting movement of the first rack gear 411. The first limiting groove 411b may penetrate at least a portion of the first rack gear 411. For example, the first limiting groove 411b may have a shape extending in a direction (e.g., a -x direction) away from the rotating member 420.

According to an embodiment, the second rack gear 412 may be engaged with the rotating member 420. The second rack gear 412 may be linearly movable by the movement of the rotating member 420. For example, the second rack gear 412 may include a plurality of second rack gear teeth 412a engaged with the rotating member 420. According to an embodiment, the second rack gear 412 may include a second limiting groove 412b for limiting movement of the second rack gear 412. The second limiting groove 412b may penetrate at least a portion of the second rack gear 412. For example, the second limiting groove 412b may have a shape extending in a direction (e.g., a +x direction) away from the rotating member 420. The second rack gear 412 may face and be spaced away from the first rack gear 411. For example, the rotating member 420 may be disposed (or positioned) between the first rack gear 411 and the second rack gear 412.

According to an embodiment, the rotating member 420 may adjust the distance between the first housing 210 and the second housing 220. The rotating member 420 may be disposed (or positioned) in the second housing 220. The rotating member 420 may move each of the plurality of moving members 410 by rotating. For example, the rotating member 420 may be engaged with each of the plurality of moving members 410. For example, the rotating member 420 may be engaged with the first rack gear 411 and the second rack gear 412. According to an embodiment, the rotating member 420 may include a pinion gear 421. The pinion gear 421 may be engaged with the first rack gear 411 and the second rack gear 412. For example, the pinion gear 412 may include pinion gear teeth 421a engaged with the first rack gear teeth 411a of the first rack gear 411 and the second rack gear teeth 412a of the second rack gear 412. The rotating member 420 may be rotatable with respect to the support bracket 440. For example, the rotating member 420 may be movable in a first rotational direction r1 and/or a second rotational direction r2 with respect to the support bracket 440.

According to an embodiment, the adjusting member 430 may transmit an external force from the user for adjusting the distance between the first housing 210 and the second housing 220 to at least some of components of the first adjusting module 400. For example, the adjusting member 430 may be exposed to the outside of the second housing 220. The adjusting member 430 may rotate the rotating member 420. For example, the adjusting member 430 may be movable in the first rotational direction r1 and/or the second rotational direction r2 with respect to the support bracket 440 in conjunction with the rotating member 420. For example, when the adjusting member 430 rotates in the first rotational direction r1, the rotating member 420 may be rotatable in the first rotational direction r1 in conjunction with the adjusting member 430 by a force transmitted from the adjusting member 430. By a rotation of the rotating member 420 in the first rotational direction r1, each of the plurality of moving members 410 may move so as to be close to each other. For example, the first rack gear 411 and the second rack gear 412 may move so as to be close to each other by the rotation of the rotating member 420 in the first rotational direction r1. As each of the plurality of moving members 410 moves to be close to each other, the distance between the first housing 210 and the second housing 220 may be decreased. For example, as the first rack gear 411 and the second rack gear 412 move to be close to each other, the distance between the first housing 210 and the second housing 220 may be changed from the first distance d1 to the second distance d2. For example, when the adjusting member 430 rotates in the second rotational direction r2, the rotating member 420 may be rotatable in the second rotational direction r2 in conjunction with the adjusting member 430 by an external force transmitted from the adjusting member 430. By rotation of the rotating member 420 in the second rotational direction r2, each of the plurality of moving members 410 may move away from each other. For example, the first rack gear 411 and the second rack gear 412 may move away from each other by the rotation of the rotating member 420 in the second rotational direction r2. As each of the plurality of moving members 410 moves away from each other, the distance between the first housing 210 and the second housing 220 may be increased. For example, as the first rack gear 411 and the second rack gear 412 move away from each other, the distance between the first housing 210 and the second housing 220 may be changed from the second distance d2 to the first distance d1.

According to an embodiment, the support bracket 440 may support the at least some of the components of the first adjusting module 400. For example, a position of the support bracket 440 may be maintained while the plurality of moving members 410, the rotating member 420, and/or the adjusting member 430 move. The support bracket 440 may be disposed in the second housing 220. For example, the support bracket 440 may be fixed to the second housing 220 by being fastened to the second housing 220. According to an embodiment, the support bracket 440 may include a first limiting protrusion 441 and/or a second limiting protrusion 442.

According to an embodiment, the first limiting protrusion 441 may limit a movement range of the first rack gear 411. The first limiting protrusion 441 may limit a movement range of the first housing 210 with respect to the second housing 220 by limiting the movement of the first rack gear 411. For example, as the first rack gear 411 moves by the rotation of the rotating member 420 in the first rotational direction r1, the first limiting protrusion 441 may be accommodated in the first limiting groove 411b of the first rack gear 411. As the first limiting protrusion 441 contacts one of the plurality of moving members 410 in the first limiting groove 411b, the movement of the first rack gear 411 may be limited. As the movement of the first rack gear 411 is limited, the rotation of the rotating member 420 in the first rotational direction r1 may be limited, and the movement of the first housing 210 with respect to the second housing 220 may be limited.

According to an embodiment, the second limiting protrusion 442 may limit a movement range of the second rack gear 412. The second limiting protrusion 442 may limit the movement range of the first housing 210 with respect to the second housing 220 by limiting the movement of the second rack gear 412. For example, as the second rack gear 412 moves by the rotation of the rotating member 420 in the first rotational direction r1, the second limiting protrusion 442 may be accommodated in the second limiting groove 412b of the second rack gear 412. As the second limiting protrusion 442 contacts another one of the plurality of moving members 410 in the second limiting groove 412b, the movement of the second rack gear 412 may be limited. As the movement of the second rack gear 412 is limited, the rotation of the rotating member 420 in the first rotational direction r1 may be limited, and the movement of the first housing 210 with respect to the second housing 220 may be limited.

As described above, the electronic device 101 according to an embodiment may provide a structure capable of easily changing the distance between the first housing 210 and the second housing 220 by rotating the rotating member 420 through the rotation of the adjusting member 430. The first adjusting module 400 may include a structure capable of maintaining the distance between the first housing 210 and the second housing 220 while an external force from the user is ceased so that the user may easily operate it. In a case that a size of the first adjusting module 400 is excessively increased for the structure capable of maintaining the distance between the first housing 210 and the second housing 220 while the external force from the user is ceased, portability of the electronic device 101 may be decreased or a space in the electronic device 101 may be wasted. Hereinafter, a structure of the first adjusting module 400 that enables the user to easily adjust the distance between the first housing 210 and the second housing 220 while saving the space in the electronic device 101 will be described.

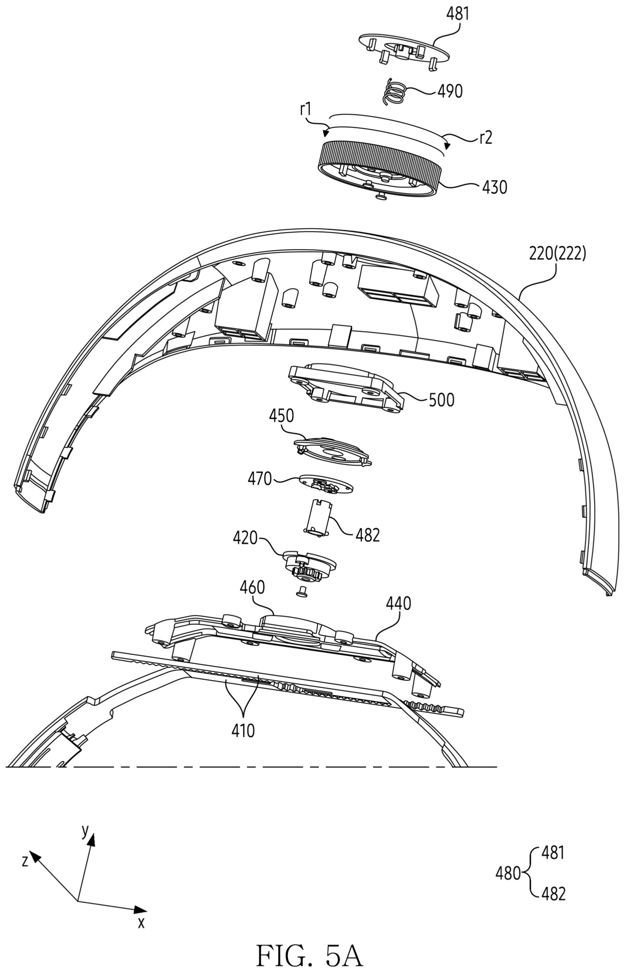

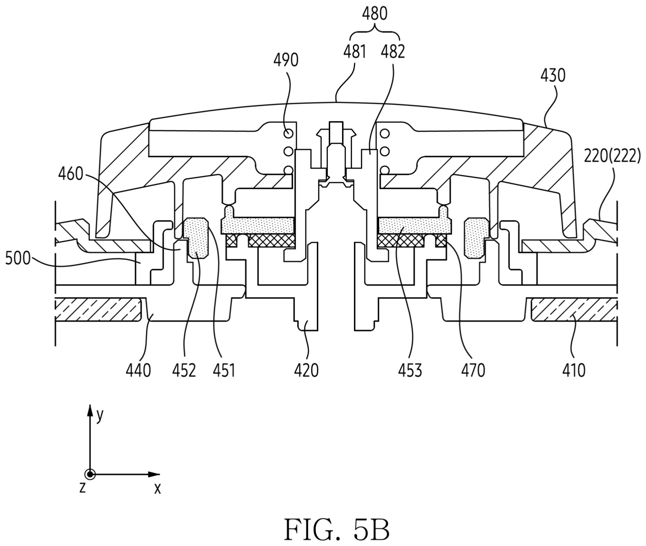

FIG. 5A is an exploded perspective view of a first adjusting module of an exemplary electronic device according to an embodiment and FIG. 5B is a cross-sectional view illustrating an example in which a first adjusting module of an exemplary electronic device according to an embodiment is cut along line A-A' of FIG. 4C.

Referring to FIGS. 5A and 5B, according to an embodiment, a first adjusting module 400 may include a first locking structure 450, a second locking structure 460, a third locking structure 470, a button 480, a deforming member 490, and/or an accommodation member 500.

According to an embodiment, a rotating member 420 may penetrate a support bracket 440. For example, the rotating member 420 may be engaged with a plurality of moving members 410 positioned under the support bracket 440 by penetrating the support bracket 440.

According to an embodiment, an adjusting member 430 may be coupled to a second housing 220 so as to be exposed to the outside of the second housing 220 (or the outside of a fourth case 222). For example, the adjusting member 430 may be disposed on an outer surface of the second housing 220. The adjusting member 430 may be rotatable with respect to the second housing 220.

According to an embodiment, the support bracket 440 may be coupled in the second housing 220. For example, the support bracket 440 may be fixed to the second housing 220 in the second housing 220. For example, the second housing 220 may be disposed between the adjusting member 430 and the support bracket 440.

According to an embodiment, the first locking structure 450 may guide rotation of the rotating member 420 and the adjusting member 430. For example, the first locking structure 450 may limit the rotation of the rotating member 420 and the adjusting member 430. The first locking structure 450 may be disposed between the rotating member 420 and the adjusting member 430. For example, the first locking structure 450 may be disposed between the adjusting member 430 and the second locking structure 460. The first locking structure 450 may be rotatable in conjunction with the adjusting member 430. For example, the adjusting member 430 may be relatively rotatable to the first locking structure 450 for a designated angle. The relative rotation of the adjusting member 430 with respect to the first locking structure 450 will be described later.

According to an embodiment, the first locking structure 450 may include at least one first locking part 451, at least one second locking part 452, and/or a flange part 453.

According to an embodiment, the at least one first locking part 451 may couple the first locking structure 450 and the adjusting member 430. For example, the at least one first locking part 451 may be engaged (or be in contact) with the adjusting member 430. The at least one first locking part 451 may transmit a force transmitted from the adjusting member 430 to another portion of the first locking structure 450 when the adjusting member 430 rotates. For example, the force from the adjusting member 430 transmitted to the at least one first locking part 451 may rotate the first locking structure 450 in conjunction with the adjusting member 430. The at least one first locking part 451 may be movable with respect to the flange part 453. For example, the at least one first locking part 451 may be movable from the flange part 453 in a direction away from the flange part 453 and/or a direction close to the flange part 453. For example, the at least one first locking part 451 may include a plurality of first locking parts spaced apart from each other, but is not limited thereto.

According to an embodiment, the at least one second locking part 452 may be coupled to the second locking structure 460. For example, the at least one second locking part 452 may be engaged (or be in contact) with the second locking structure 460. The at least one second locking part 452 may be movable with respect to the flange part 453 in conjunction with the at least one first locking part 451. For example, the at least one first locking part 451 may be disposed on the at least one second locking part 452. For example, the at least one first locking part 451 and the at least one second locking part 452 may be stacked with respect to each other. For example, the at least one second locking part 452 may include a plurality of second locking parts spaced apart from each other, but is not limited thereto.

According to an embodiment, the flange part 453 may be connected to the at least one first locking part 451 and the at least one second locking part 452. For example, in a case that the at least one first locking part 451 includes the plurality of first locking parts and the at least one second locking part 452 includes the plurality of second locking parts, the flange part 453 may be disposed between the plurality of first locking parts and the plurality of second locking parts. The flange part 453 may be disposed between the adjusting member 430 and the rotating member 420. For example, the flange part 453 may be disposed between the adjusting member 430 and the third locking structure 470.

According to an embodiment, the second locking structure 460 may be coupled to the support bracket 440. For example, the second locking structure 460 may be connected to the support bracket 440. For example, the second locking structure 460 may be integrally formed with the support bracket 440, but is not limited thereto. For example, the second locking structure 460 may surround (or cover) the first locking structure 450. The second locking structure 460 may be fixed in the second housing 220. For example, the second locking structure 460 may be fixed to the second housing 220 as it is fastened to the fourth case 222. For example, a position of the second locking structure 460 may be maintained while the rotating member 420 and the adjusting member 430 move.

According to an embodiment, the third locking structure 470 may be coupled to the rotating member 420. For example, the third locking structure 470 may be fastened to the rotating member 420. For example, the third locking structure 470 may be rotatable in conjunction with the rotating member 420 while the rotating member 420 rotates. The third locking structure 470 may be coupled to the button 480. For example, the third locking structure 470 may be engaged (or be in contact) with the button 480. For example, the third locking structure 470 may be coupled to a portion of the button 480 that has penetrated the third locking structure 470. The third locking structure 470 may be disposed between the first locking structure 450 and the support bracket 440.

According to an embodiment, the button 480 may be exposed to the outside of the second housing 220. The button 480 may be rotatable in conjunction with the adjusting member 430. When the adjusting member 430 rotates, the button 480 may transmit a force from the adjusting member 430 to the third locking structure 470 and the rotating member 420. The third locking structure 470 and the rotating member 420 may be rotatable in conjunction with the adjusting member 430 by receiving the force from the adjusting member 430 through the button 480 when the adjusting member 430 rotates. According to an embodiment, the button 480 may include an exposed part 481 and an extending part 482.

According to an embodiment, the exposed part 481 may be exposed to the outside of the second housing 220. For example, the exposed part 481 may be surrounded (or covered) by the adjusting member 430. For example, a size of the exposed part 481 may be smaller than a size of the adjusting member 430.

According to an embodiment, the extending part 482 may be coupled to the exposed part 481. For example, the extending part 482 may be formed separately from the exposed part 481 and then fastened through a fastening member (e.g., a screw), but is not limited thereto. For example, the extending part 482 may be integrally formed with the exposed part 481. The extending part 482 may extend from the exposed part 481. For example, the extending part 482 may extend from the exposed part 481 in a first direction (e.g., a -y direction) toward the rotating member 420. The extending part 482 may penetrate the first locking structure 450 and/or the third locking structure 470 by extending in the first direction (e.g., the -y direction) from the exposed part 481. The extending part 482 may be engaged (or be in contact) with the third locking structure 470. As the extending part 482 is engaged with the third locking structure 470, the force transmitted from the adjusting member 430 while the adjusting member 430 rotates may be transmitted to the third locking structure 470 through the extending part 482. Since the third locking structure 470 is fastened to the rotating member 420, the force from the adjusting member 430 transmitted to the third locking structure 470 through the extending part 482 may rotate the rotating member 420.

According to an embodiment, the button 480 may be movable with respect to the adjusting member 430. For example, the button 480 may be linearly movable with respect to the adjusting member 430. For example, the button 480 may be movable with respect to the adjusting member 430 in the first direction toward the adjusting member 430 (or in a direction (e.g., the -y direction) toward the rotating member 420) and/or a second direction (e.g., a +y direction) opposite to the first direction (e.g., the -y direction). The second direction (e.g., the +y direction) may be a direction toward the outside of the second housing 220. As the button 480 is movable with respect to the adjusting member 430, a state of engagement between the button 480 and the third locking structure 470 may be changed. The change in the state between the button 480 and the third locking structure 470 according to movement of the button 480 will be described later.

According to an embodiment, the deforming member 490 may restore a position of the button 480. For example, the deforming member 490 may apply a force to the button 480 in the second direction (e.g., the +y direction). The deforming member 490 may be deformable. For example, the deforming member 490 may be an elastically deformable spring, but is not limited thereto. The deforming member 490 may be in contact with the button 480 and the adjusting member 430. For example, the deforming member 490 may be disposed between the button 480 and the adjusting member 430. For example, the deforming member 490 may surround (or cover) a portion of the button 480. For example, the deforming member 490 may surround (or cover) a portion of the exposed part 481 and a portion of the extending part 482.

According to an embodiment, the accommodation member 500 may be coupled to the second housing 220. For example, the accommodation member 500 may be fastened in the second housing 220. For example, the accommodation member 500 may be fixed in the second housing 220. As it is fastened to the second housing 220, a position of the accommodation member 500 may be maintained while the adjusting member 430 moves. The accommodation member 500 may cover (or surround) a portion of the first locking structure 450, the third locking structure 470, and/or the rotating member 420.

According to an embodiment, the adjusting member 430 may be relatively rotatable to the first locking structure 450. A state of the first locking structure 450 may be changed by the relative rotation of the adjusting member 430 with respect to the first locking structure 450. The change in the state of the first locking structure 450 may be described through the following drawings.

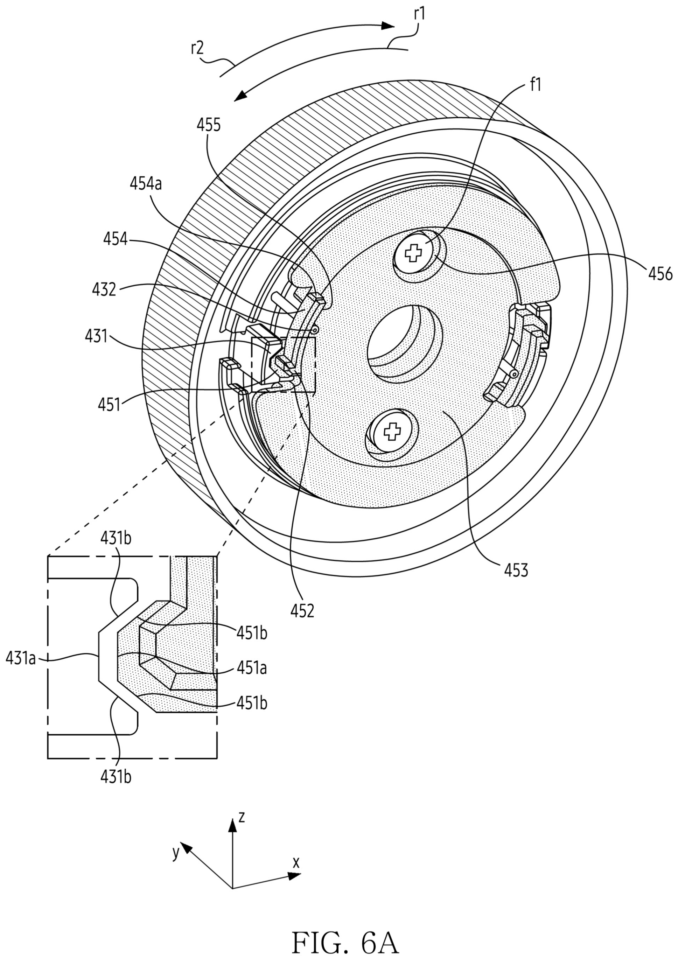

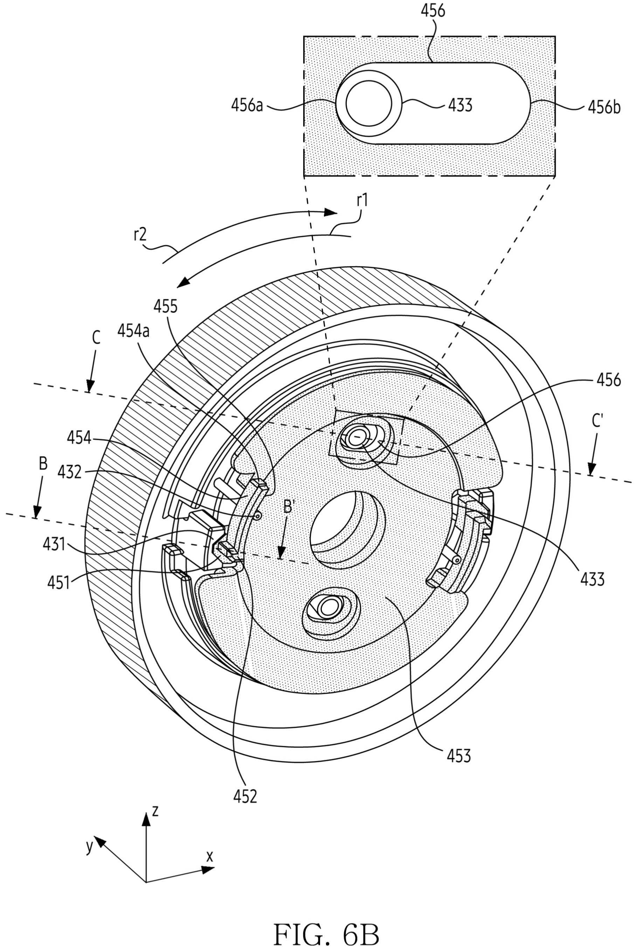

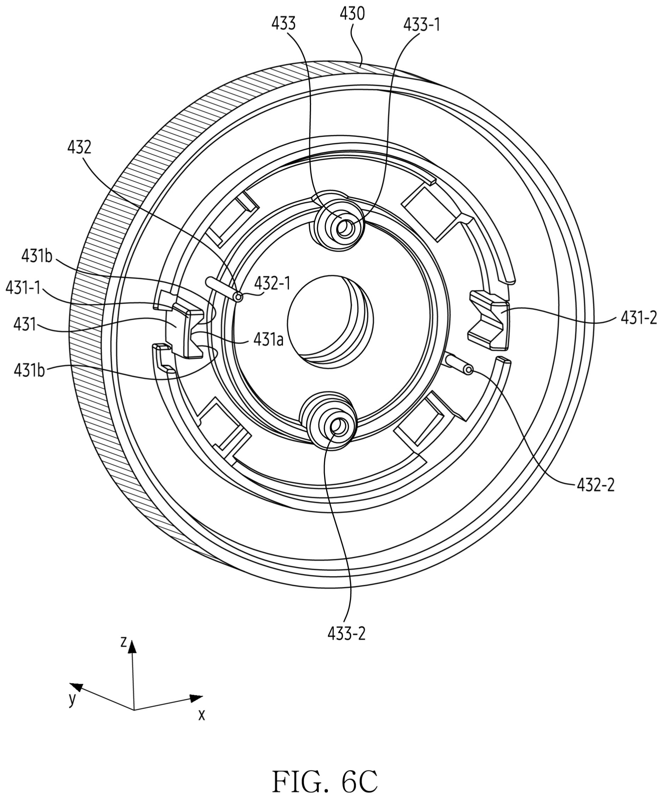

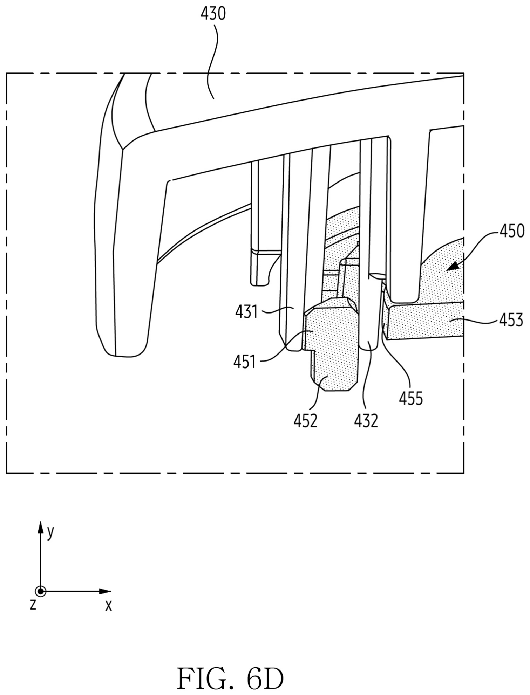

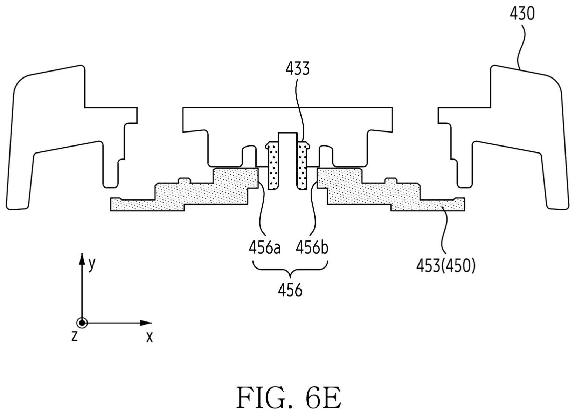

FIG. 6A is a perspective view illustrating an adjusting member of an exemplary first adjusting module and an exemplary first locking structure according to an embodiment, FIG. 6B is a perspective view illustrating a state in which a fastening member is omitted from an adjusting member of an exemplary first adjusting module and an exemplary first locking structure according to an embodiment, FIG. 6C is a perspective view illustrating an exemplary adjusting member according to an embodiment, FIG. 6D is a cross-sectional view illustrating an example in which an exemplary adjusting member and first locking structure according to an embodiment are cut along line B-B' of FIG. 6B, and FIG. 6E is a cross-sectional view illustrating an example in which an exemplary adjusting member and first locking structure according to an embodiment are cut along line C-C' of FIG. 6B.

Referring to FIGS. 6A, 6B, 6C, 6D, and 6E, according to an embodiment, an adjusting member 430 may further include at least one first coupling part 431, at least one adjusting protrusion 432, and/or at least one first guiding part 433.

According to an embodiment, the at least one first coupling part 431 may accommodate at least one first locking part 451. For example, the at least one first coupling part 431 may be engaged (or be in contact) with the at least one first locking part 451. For example, the at least one first coupling part 431 may have a shape corresponding to the at least one first locking part 451. For example, at least one second locking part 452 may be disposed outside the at least one first coupling part 431. For example, the at least one first coupling part 431 may include a plurality of first coupling parts 431-1 and 431-2 spaced apart from each other in a radial direction of the adjusting member 430, but is not limited thereto. The radial direction of a component may indicate a direction away from a center of the component, and the corresponding expression may be used substantially the same below unless otherwise stated. The plurality of first coupling parts 431-1 and 431-2 may be disposed to be symmetrical with respect to the first locking structure 450. For example, the plurality of first coupling parts 431-1 and 431-2 may be substantially the same as each other. According to an embodiment, the at least one first coupling part 431 may include a first support surface 431a and a plurality of first guide surfaces 431b.

According to an embodiment, the first support surface 431a may be perpendicular to the radial direction of the adjusting member 430. For example, the first support surface 431a may face a direction opposite to the radial direction of the adjusting member 430. For example, the first support surface 431a may face a flange part 453.

According to an embodiment, the plurality of first guide surfaces 431b may guide movement of the at least one first locking part 451 with respect to the adjusting member 430. The plurality of first guide surfaces 431b may be inclined with respect to the first support surface 431a. For example, the plurality of first guide surfaces 431b may have a shape inclined with respect to the radial direction of the adjusting member 430. The first support surface 431a may be disposed between the plurality of first guide surfaces 431b.

According to an embodiment, the at least one first locking part 451 may have a shape corresponding to the at least one first coupling part 431. For example, the at least one first locking part 451 may include a second support surface 451a and a plurality of second guide surfaces 451b.

According to an embodiment, the second support surface 451a may have a shape corresponding to the first support surface 431a. The second support surface 451a may be perpendicular to the radial direction of the adjusting member 430. According to an embodiment, the second support surface 451a may be perpendicular to the radial direction of the adjusting member 430. For example, the second support surface 451a may face the radial direction of the adjusting member 430.

According to an embodiment, the plurality of second guide surfaces 451b may guide the movement of the at least one first locking part 451 with respect to the adjusting member 430. The plurality of second guide surfaces 451b may be inclined with respect to the second support surface 451a. For example, the plurality of second guide surfaces 451b may have a shape inclined with respect to the radial direction of the adjusting member 430. For example, the plurality of second guide surfaces 451b may have a shape inclined by 30 degrees to 60 degrees with respect to the radial direction. The second support surface 451a may be disposed between the plurality of second guide surfaces 451b.

According to an embodiment, the at least one adjusting protrusion 432 may protrude from the adjusting member 430. The at least one adjusting protrusion 432 may extend from the adjusting member 430. For example, the at least one adjusting protrusion 432 may have a shape extending from the adjusting member 430 in a first direction (e.g., a -y direction). For example, the at least one adjusting protrusion 432 may include a plurality of adjusting protrusions 432-1 and 432-2 spaced apart from each other in the radial direction of the adjusting member 430, but is not limited thereto. The plurality of adjusting protrusions 432-1 and 432-2 may be disposed to be symmetrical with respect to the first locking structure 450. For example, the plurality of adjusting protrusions 432-1 and 432-2 may be substantially the same as each other.

According to an embodiment, the at least one first guiding part 433 may protrude from the adjusting member 430. The at least one first guiding part 433 may extend from the adjusting member 430. For example, the at least one first guiding part 433 may have a shape extending from the adjusting member 430 in the first direction (e.g., the -y direction). For example, the at least one first guiding part 433 may include a plurality of first guiding parts 433-1 and 433-2 spaced apart from each other in the radial direction of the adjusting member 430, but is not limited thereto. The plurality of first guiding parts 433-1 and 433-2 may be disposed to be symmetrical with respect to the first locking structure 450. For example, the plurality of first guiding parts 433-1 and 433-2 may be substantially the same as each other.

According to an embodiment, the first locking structure 450 may further include a connecting part 454, a groove 455, and/or a second guiding part 456.

According to an embodiment, the connecting part 454 may connect the at least one first locking part 451 and the at least one second locking part 452 to the flange part 453. For example, the connecting part 454 may be disposed between the at least one second locking part 452 and the flange part 453. For example, the connecting part 454 may extend from the flange part 453 to the at least one second locking part 452. The connecting part 454 may be deformable (or movable). For example, the connecting part 454 may be movable in a direction away from the flange part 453 or a direction close to the flange part 453.

According to an embodiment, the groove 455 may provide (or form) a space in which the at least one first locking part 451, the at least one second locking part 452, and the connecting part 454 may move with respect to the flange part 453. The groove 455 may be disposed between the flange part 453 and the connecting part 454. The groove 455 may have a shape extending along the connecting part 454. For example, it may extend from one end 454a of the connecting part 454 connected to the flange part 453 to the at least one second locking part 452. The at least one adjusting protrusion 432 may be disposed in the groove 455 so that a force required for deformation of the connecting part 454 is changed. The at least one adjusting protrusion 432 may be accommodated (or inserted) in the groove 455. For example, as a distance between the at least one adjusting protrusion 432 and the at least one first locking part 451 becomes closer, magnitude of a force required for movement of the at least one first locking part 451 and the at least one second locking part 452 may be increased. For example, as the distance between the at least one adjusting protrusion 432 and the at least one first locking part 451 is decreased, the magnitude of the force required for the deformation of the connecting part 454 may be increased. For example, as a distance between the at least one adjusting protrusion 432 and the one end 454a of the connecting part 454 is increased, the magnitude of the force required for the movement of the at least one first locking part 451 and the at least one second locking part 452 may be increased.

According to an embodiment, the second guiding part 456 may penetrate the first locking structure 450. For example, the second guiding part 456 may penetrate the flange part 453. The second guiding part 456 may accommodate the at least one first guiding part 433. The at least one first guiding part 433 may be inserted into the second guiding part 456. A size of the second guiding part 456 may be larger than a size of the at least one first guiding part 433. For example, an area of the second guiding part 456 may be larger than an area of the at least one first guiding part 433. For example, the second guiding part 456 may surround (or cover) the at least one first guiding part 433. The at least one first guiding part 433 and the second guiding part 456 may be coupled by a fastening member f1. For example, the fastening member f1 may penetrate the at least one first guiding part 433 and the second guiding part 456. For example, the fastening member f1 may couple the adjusting member 430 and the first locking structure 450 by being inserted into the at least one first guiding part 433 and the second guiding part 456.

According to an embodiment, a state of the first locking structure 450 may include a first state and a second state.

According to an embodiment, when the state of the first locking structure 450 is the first state, the adjusting member 430 may be rotatable in a first rotational direction r1 in conjunction with the first locking structure 450. When the state of the first locking structure 450 is the first state, the at least one first locking part 451 may be fully engaged with the at least one first coupling part 431. For example, when the state of the first locking structure 450 is the first state, the second support surface 451a of the at least one first locking part 451 may face the first support surface 431a of the at least one first coupling part 431. For example, when the state of the first locking structure 450 is the first state, a direction (e.g., a -x direction) in which the second support surface 451a faces may be opposite to a direction (e.g., a +x direction) in which the first support surface 431a faces. For example, when the state of the first locking structure 450 is the first state, the first support surface 431a may be disposed between the plurality of second guide surfaces 451b. For example, when the state of the first locking structure 450 is the first state, each of the plurality of first guide surfaces 431b may be in contact with each of the plurality of second guide surfaces 451b.

According to an embodiment, when the state of the first locking structure 450 is the first state, the at least one first guiding part 433 may be in contact with one end 456a of the second guiding part 456. When the state of the first locking structure 450 is the first state, while the adjusting member 430 rotates in the first rotational direction r1, the at least one first guiding part 433 may maintain a state of being in contact with the one end 456a of the second guiding part 456. Since the at least one first guiding part 433 and the one end 456a of the second guiding part 456 are in contact with each other in the first state, a force from the adjusting member 430 may be transmitted to the first locking structure 450 through the at least one first guiding part 433 and the second guiding part 456. As the force from the adjusting member 430 is transmitted to the first locking structure 450, the adjusting member 430 may be rotatable in conjunction with the first locking structure 450 in the first rotational direction r1 in the first state of the first locking structure 450.

According to an embodiment, while the state of the first locking structure 450 is changed from the first state to the second state, the adjusting member 430 may be relatively rotatable to the first locking structure 450 in a second rotational direction r2 by a designated angle. The designated angle may be defined by a size difference between the at least one first guiding part 433 and the second guiding part 456. For example, the designated angle may be 4 degrees, but is not limited thereto. The adjusting member 430 may change the state of the first locking structure 450 from the first state to the second state by rotating relatively in the second rotational direction r2 to the first locking structure 450 for the designated angle. For example, while the adjusting member 430 rotates in the second rotational direction r2 by the designated angle, the at least one first guiding part 433 may move from the one end 456a of the second guiding part 456 toward the other end 456b of the second guiding part 456. For example, since the contact between the at least one first guiding part 433 and the second guiding part 456 is released while the state of the first locking structure 450 is changed from the first state to the second state, the adjusting member 430 may be relatively rotatable to the first locking structure 450 by the designated angle. As the at least one first guiding part 433 and the other end 456b of the second guiding part 456 are in contact with each other, the change from the first state to the second state of the first locking structure 450 may be completed.

According to an embodiment, when the state of the first locking structure 450 is the second state, the adjusting member 430 may be rotatable in the second rotational direction r2 in conjunction with the first locking structure 450. When the state of the first locking structure 450 is the second state, the at least one first locking part 451 may be partially engaged with the at least one first coupling part 431. For example, when the state of the first locking structure 450 is the second state, a portion of the at least one first locking part 451 may be positioned outside the at least one first coupling part 431. For example, when the state of the first locking structure 450 is the second state, the second support surface 451a of the at least one first locking part 451 may face a portion of the plurality of first guide surfaces 431b of the at least one first coupling part 431. For example, when the state of the first locking structure 450 is the second state, the second support surface 451a may be in contact with the portion of the plurality of first guide surfaces 431b. For example, when the state of the first locking structure 450 is the second state, the first support surface 431a may be in contact with a portion of the plurality of second guide surfaces 451b. For example, a contact area between the at least one first locking part 451 and the at least one first coupling part 431 may be smaller in the second state than in the first state of the first locking structure 450.

According to an embodiment, when the state of the first locking structure 450 is the second state, the at least one first guiding part 433 may be in contact with the other end 456b of the second guiding part 456. When the state of the first locking structure 450 is the second state, while the adjusting member 430 rotates in the second rotational direction r2, the at least one first guiding part 433 may maintain a state of being in contact with the other end 456b of the second guiding part 456. Since the at least one first guiding part 433 and the other end 456b of the second guiding part 456 are in contact with each other in the second state, the force from the adjusting member 430 may be transmitted to the first locking structure 450 through the at least one first guiding part 433 and the second guiding part 456. As the force from the adjusting member 430 is transmitted to the first locking structure 450, the adjusting member 430 and the first locking structure 450 may be rotatable together in the second rotational direction r2 in the second state of the first locking structure 450.

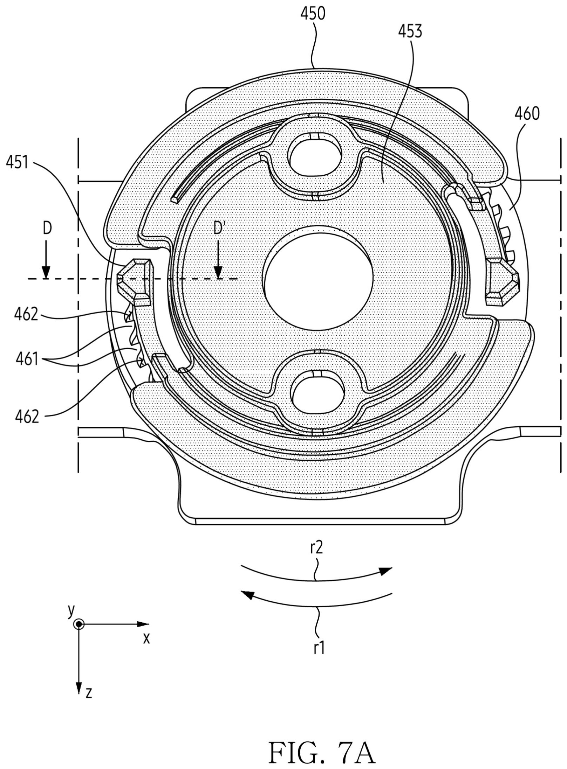

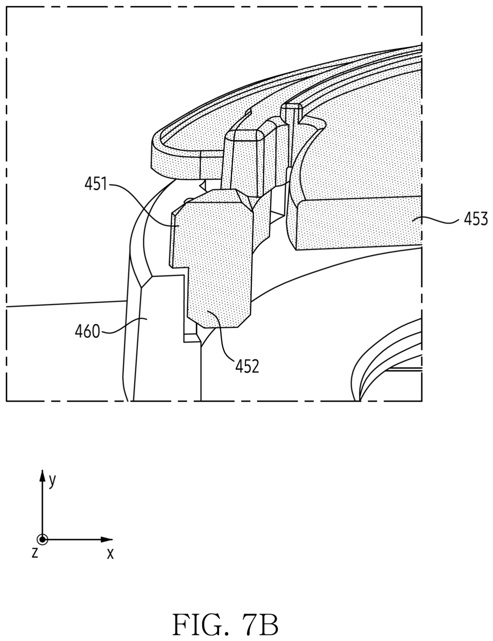

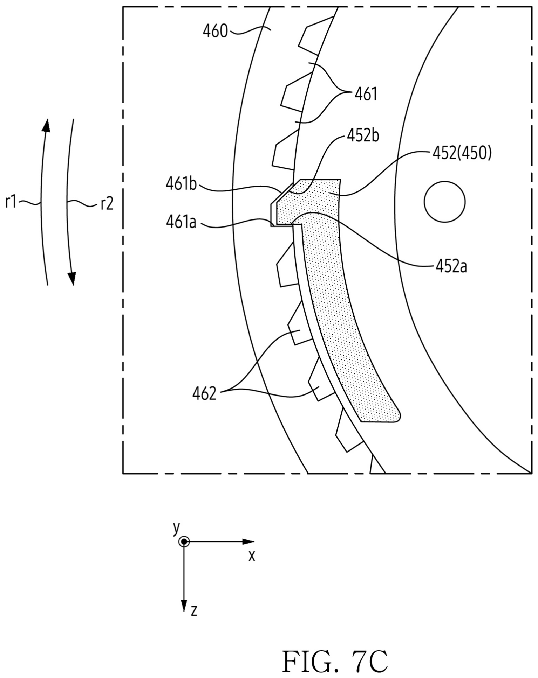

FIG. 7A is a top view of an exemplary first locking structure and second locking structure according to an embodiment, FIG. 7B is a cross-sectional view illustrating an example in which an exemplary first locking structure and second locking structure according to an embodiment are cut along line D-D' of FIG. 7A, and FIG. 7C is a top view indicating a relationship between a second locking part of an exemplary first locking structure and an exemplary second locking structure according to an embodiment.

Referring to FIGS. 7A, 7B, and 7C, according to an embodiment, a second locking structure 460 may include a plurality of first locking protrusions 461 and a plurality of first locking grooves 462.

According to an embodiment, the plurality of first locking protrusions 461 may be engaged with at least one second locking part 452. The plurality of first locking protrusions 461 may be spaced apart from each other. For example, the plurality of first locking protrusions 461 may be spaced apart from each other in a circumferential direction of the second locking structure 460.

According to an embodiment, the plurality of first locking grooves 462 may accommodate the at least one second locking part 452. The plurality of first locking grooves 462 may be spaced apart from each other. For example, the plurality of first locking grooves 462 may be spaced apart from each other in the circumferential direction of the second locking structure 460. The plurality of first locking grooves 462 may be positioned between the plurality of first locking protrusions 461.

According to an embodiment, the at least one second locking part 452 may have a shape for limiting rotation of a first locking structure 450 in a second rotational direction r2. For example, the at least one second locking part 452 may include a first contact surface 452a and a first sliding surface 452b.

According to an embodiment, the first contact surface 452a may have the shape for limiting the rotation of the first locking structure 450 in the second rotational direction r2. The first contact surface 452a may have a shape extending in a radial direction of the second locking structure 460. For example, the first contact surface 452a may face a direction perpendicular to the radial direction of the second locking structure 460.

According to an embodiment, the first sliding surface 452b may have a shape for guiding rotation of the first locking structure 450 in a first rotational direction r1. The first sliding surface 452b may have a shape inclined with respect to the first contact surface 452a. For example, the first sliding surface 452b may have a shape inclined with respect to the radial direction of the second locking structure 460.

According to an embodiment, each of the plurality of first locking protrusions 461 may include a second contact surface 461a and a second sliding surface 461b.

According to an embodiment, the second contact surface 461a of each of the plurality of first locking protrusions 461 may have the shape for limiting the rotation of the first locking structure 450 in the second rotational direction r2. For example, the second contact surface 461a of each of the plurality of first locking protrusions 461 may have the shape extending in the radial direction of the second locking structure 460.

According to an embodiment, the second sliding surface 461b of each of the plurality of first locking protrusions 461 may have the shape for guiding the rotation of the first locking structure 450 in the first rotational direction r1. The second sliding surface 461b of each of the plurality of first locking protrusions 461 may have a shape inclined with respect to the second contact surface 461a. For example, the second sliding surface 461b of each of the plurality of first locking protrusions 461 may have a shape inclined with respect to the radial direction of the second locking structure 460. For example, the second sliding surface 461b of each of the plurality of first locking protrusions 461 may have a shape inclined by 30 degrees to 60 degrees with respect to the radial direction of the second locking structure 460.

According to an embodiment, in a first state of the first locking structure 450, the at least one second locking part 452 may be engaged with the plurality of first locking protrusions 461. In the first state of the first locking structure 450, the at least one second locking part 452 may be positioned (or accommodated) in the plurality of first locking grooves 462. In the first state of the first locking structure 450, the second contact surface 461a may face the first contact surface 452a. For example, in the first state of the first locking structure 450, the second contact surface 461a may be in contact with the first contact surface 452a. In the first state of the first locking structure 450, the second sliding surface 461b may face the first sliding surface 452b. For example, in the first state of the first locking structure 450, the second sliding surface 461b may be in contact with the first sliding surface 452b. In the first state of the first locking structure 450, while the first locking structure 450 rotates in the first rotational direction r1, the first sliding surface 452b may slide with respect to the second sliding surface 461b. For example, since each of the first sliding surface 452b and the second sliding surface 461b is inclined with respect to the first rotational direction r1, in the first state of the first locking structure 450, the first locking structure 450 may be rotatable in the first rotational direction r1 with respect to the second locking structure 460. In the first state of the first locking structure 450, the rotation of the first locking structure 450 in the second rotational direction r2 may be limited. For example, since the first contact surface 452a and the second contact surface 461a are perpendicular to the second rotational direction r2, the rotation of the first locking structure 450 in the second rotational direction r2 with respect to the second locking structure 460 may be limited in the first state of the first locking structure 450.

According to an embodiment, while the state of the first locking structure 450 is changed from the first state to a second state, at least one first locking part 451 may move so as to be close to a flange part 453. As the at least one first locking part 451 gets close to the flange part 453, the at least one second locking part 452 moving in conjunction with the at least one first locking part 451 may move away from the plurality of first locking protrusions 461.

According to an embodiment, in the second state of the first locking structure 450, the engagement between the at least one second locking part 452 and the plurality of first locking protrusions 461 may be released. In the second state of the first locking structure 450, the at least one second locking part 452 may be positioned outside the plurality of first locking grooves 462. In the second state of the first locking structure 450, as the at least one second locking part 452 moves away from the plurality of first locking protrusions 461, the contact between the first contact surface 452a and the second contact surface 461a and the contact between the first sliding surface 452b and the second sliding surface 461b may be released. Since the first contact surface 452a is spaced apart from the second contact surface 461a in the second state of the first locking structure 450, the first locking structure 450 may be rotatable in the second rotational direction r2 with respect to the second locking structure 460.

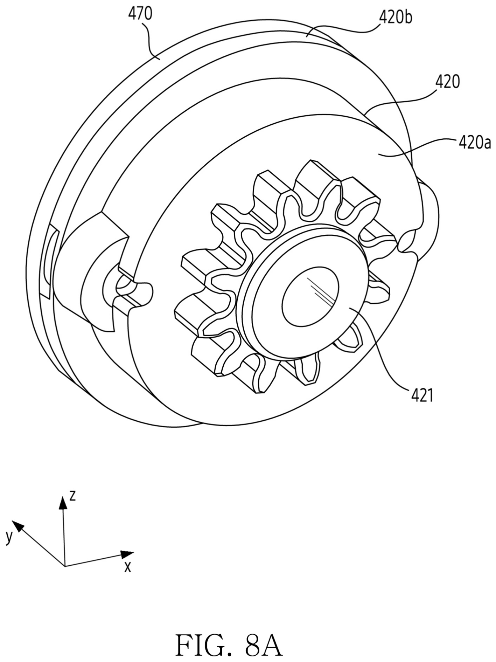

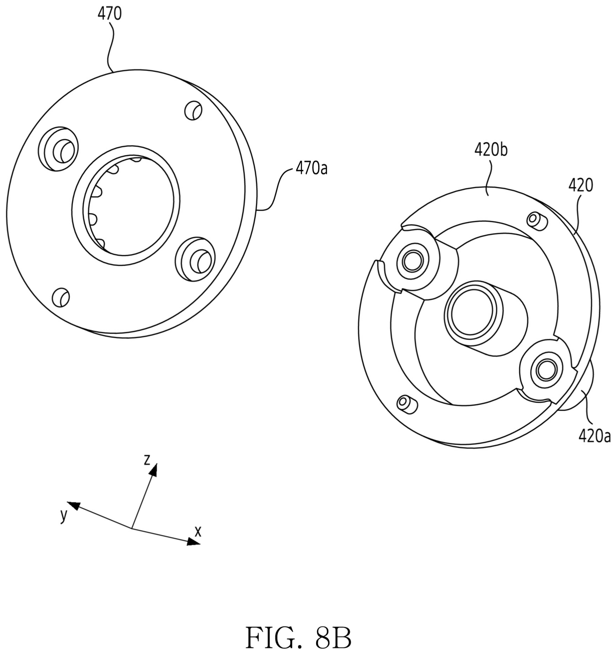

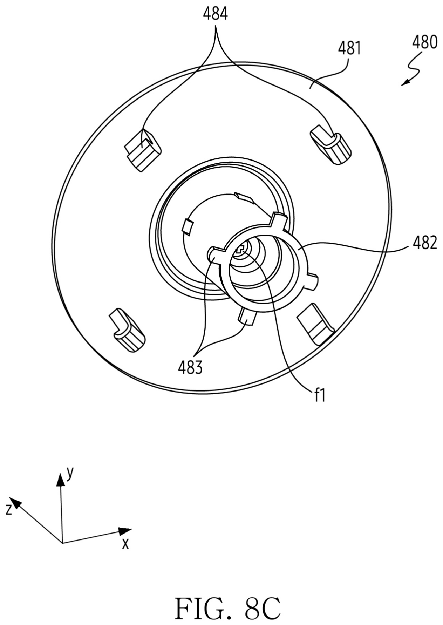

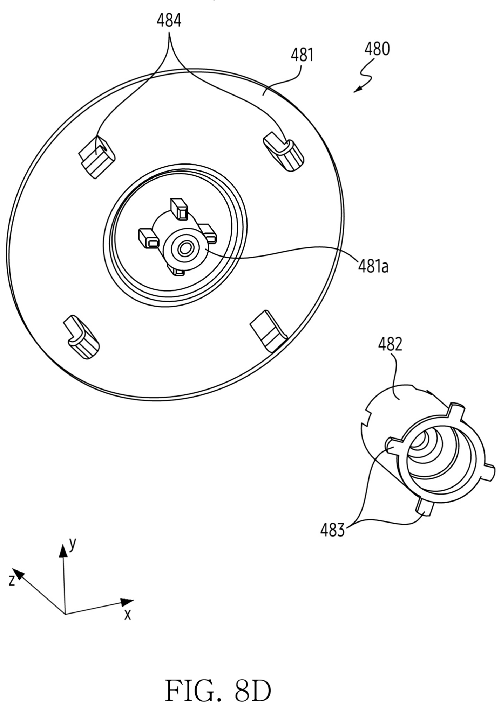

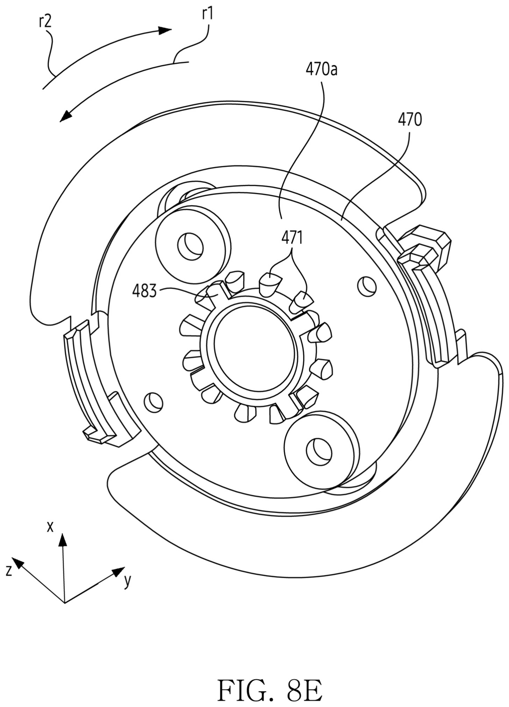

FIG. 8A is a perspective view illustrating a rotating member and a third locking structure according to an embodiment, FIG. 8B is an exploded perspective view illustrating a rotating member and a third locking structure according to an embodiment, FIG. 8C is a perspective view illustrating an exemplary button according to an embodiment, and FIG. 8D is an exploded perspective view of an exemplary button according to an embodiment. FIG. 8E is a perspective view illustrating an exemplary first locking structure, third locking structure, and button according to an embodiment.

Referring to FIGS. 8A, 8B, 8C, 8D, and 8E, according to an embodiment, a third locking structure 470 may be disposed on a rotating member 420. For example, the third locking structure 470 may be disposed on the other surface 420b of the rotating member 420 opposite to one surface 420a of the rotating member 420 on which a pinion gear 421 is disposed. The third locking structure 470 may include a plurality of second locking protrusions 471.

According to an embodiment, the plurality of second locking protrusions 471 may be spaced apart from each other. For example, the plurality of second locking protrusions 471 may be spaced apart from each other in a circumferential direction of the third locking structure 470 and/or the rotating member 420. The plurality of second locking protrusions 471 may protrude from the third locking structure 470. For example, the plurality of second locking protrusions 471 may protrude from one surface 470a of the third locking structure 470 facing the other surface 420b of the rotating member 420. For example, the plurality of second locking protrusions 471 may extend in a first direction (e.g., a -y direction) from the one surface 470a of the third locking structure 470.

According to an embodiment, an extending part 482 may be coupled to an exposed part 481. For example, the exposed part 481 may include a coupling protrusion 481a extending in the first direction (e.g., the -y direction). The coupling protrusion 481a may be inserted into the extending part 482. The extending part 482 may cover (or surround) the coupling protrusion 481a. As a fastening member f1 penetrates the coupling protrusion 481a and the extending part 482 in a state that the coupling protrusion 481a is inserted into the extending part 482, the exposed part 481 and the extending part 482 may be coupled.

According to an embodiment, a button 480 may include at least one third locking part 483 and at least one third guiding part 484.

According to an embodiment, the at least one third locking part 483 may couple the button 480 and the third locking structure 470. The at least one third locking part 483 may protrude from the extending part 482. For example, the at least one third locking part 483 may protrude from the extending part 482 in a radial direction of the extending part 482 (or a radial direction of the button 480). The at least one third locking part 483 may be engaged with the plurality of second locking protrusions 471. The engagement between the at least one third locking part 483 and the plurality of second locking protrusions 471 may be released by movement of the button 480. According to an embodiment, a state of the third locking structure 470 may include an engaged state and a released state.

According to an embodiment, when the state of the third locking structure 470 is the engaged state, the at least one third locking part 483 may be engaged with the plurality of second locking protrusions 471. For example, when the state of the third locking structure 470 is the engaged state, the at least one third locking part 483 may be positioned between the plurality of second locking protrusions 471. When the state of the third locking structure 470 is the engaged state, the at least one third locking part 483 may rotate in conjunction with the third locking structure 470, the rotating member 420, and the button 480 by being engaged with the plurality of second locking protrusions 471. For example, the at least one third locking part 483 may transmit a force from the button 480 to the plurality of second locking protrusions 471. The force from the button 480 may be transmitted to the plurality of second locking protrusions 471 through the at least one third locking part 483, thereby rotating the third locking structure 470 and the rotating member 420 in conjunction with the button 480. For example, when the state of the third locking structure 470 is the engaged state, the third locking structure 470, the rotating member 420, and the button 480 may rotate together in a first rotational direction r1 and a second rotational direction r2.

According to an embodiment, when the state of the third locking structure 470 is the released state, the engagement between the at least one third locking part 483 and the plurality of second locking protrusions 471 may be released. As the engagement between the at least one third locking part 483 and the plurality of second locking protrusions 471 is released, when the state of the third locking structure 470 is the released state, the rotating member 420 and the third locking structure 470 fastened to the rotating member 420 may be independently rotatable to the remaining components of a first adjusting module (e.g., the first adjusting module 400 of FIGS. 4A, 4B, and 4C). For example, as the engagement between the at least one third locking part 483 and the plurality of second locking protrusions 471 is released, when the state of the third locking structure 470 is the released state, the rotating member 420 and the third locking structure 470 may be independently rotatable to the first locking structure 450 and the button 480.

According to an embodiment, the at least one third guiding part 484 may protrude from the exposed part 481. The at least one third guiding part 484 may extend from the exposed part 481. For example, at least a portion of the at least one third guiding part 484 may have a shape extending from the exposed part 481 in the first direction (e.g., the -y direction). The at least one third guiding part 484 may transmit a force from an adjusting member (e.g., the adjusting member 430 of FIGS. 4A, 4B, and 4C) to the button 480.

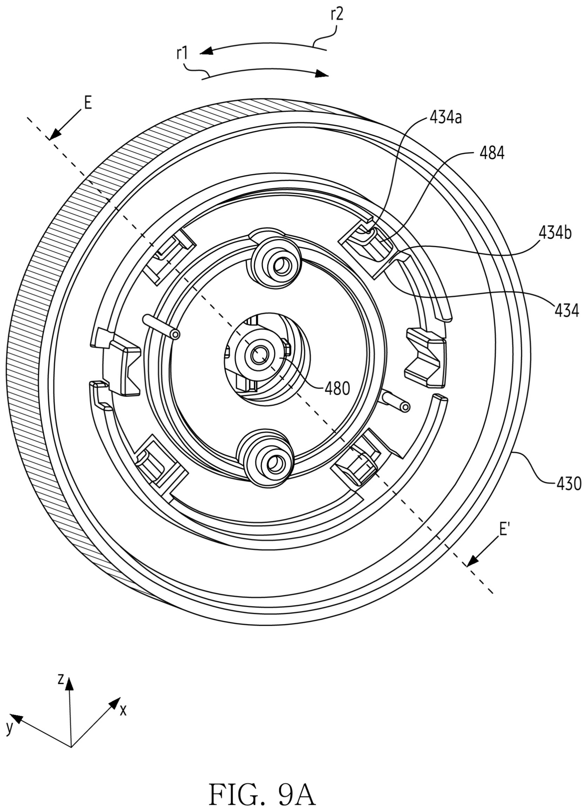

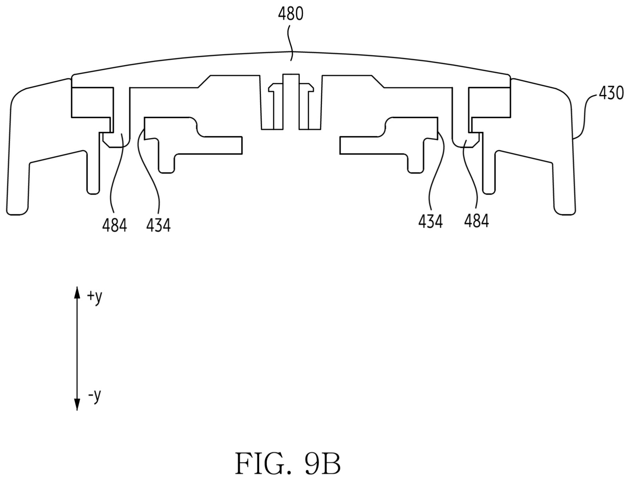

FIG. 9A is a perspective view of an exemplary adjusting member and button according to an embodiment and FIG. 9B is a cross-sectional view illustrating an example in which an exemplary adjusting member and button according to an embodiment are cut along line E-E' of FIG. 9A.

Referring to FIGS. 9A and 9B, according to an embodiment, an adjusting member 430 may include at least one fourth guiding part 434.

According to an embodiment, the at least one fourth guiding part 434 may penetrate at least one third guiding part 484. The at least one fourth guiding part 434 may accommodate the at least one third guiding part 484. For example, the at least one third guiding part 484 may be disposed (or accommodated) in the at least one fourth guiding part 434. For example, the at least one fourth guiding part 434 may cover (or surround) the at least one third guiding part 484.

According to an embodiment, a portion of the at least one third guiding part 484 may have a shape bent with respect to a first direction (e.g., a -y direction). As the portion of the at least one third guiding part 484 has the bent shape, the at least one third guiding part 484 may be hooked on the adjusting member 430. As the at least one third guiding part 484 is hooked on the adjusting member 430, separation between a button 480 and the adjusting member 430 may be decreased (or suppressed).

According to an embodiment, when a state of a first locking structure (e.g., the first locking structure 450 of FIGS. 5A and 5B) is a first state, the button 480 may be rotatable in conjunction with the adjusting member 430 in a first rotational direction r1. When the state of the first locking structure 450 is the first state, the at least one third guiding part 484 may be in contact with one end 434a of the at least one fourth guiding part 434. When the state of the first locking structure 450 is the first state, while the adjusting member 430 is rotated in the first rotational direction r1, the at least one third guiding part 484 may maintain a state of being in contact with the one end 434a of the at least one fourth guiding part 434. Since the at least one third guiding part 484 is in contact with the one end 434a of the at least one fourth guiding part 434 in the first state, a force from the adjusting member 430 may be transmitted to the button 480 through the at least one third guiding part 484. As the force from the adjusting member 430 is transmitted to the button 480, the adjusting member 430 and the button 480 may be rotatable together in the first rotational direction r1 in the first state of the first locking structure 450.

According to an embodiment, while the state of the first locking structure 450 is changed from the first state to a second state, the adjusting member 430 may be relatively rotatable to the button 480 in a second rotational direction r2 by a designated angle. As the adjusting member 430 rotates relatively to the button 480 in the second rotational direction r2 for the designated angle, the state of the first locking structure 450 may be changed from the first state to the second state. For example, while the adjusting member 430 rotates in the second rotational direction r2 by the designated angle, the at least one third guiding part 484 may move from the one end 434a of the at least one fourth guiding part 434 toward the other end 434b of the at least one fourth guiding part 434. For example, since the contact between the at least one third guiding part 484 and the at least one fourth guiding part 434 is released while the state of the first locking structure 450 is changed from the first state to the second state, the adjusting member 430 may be relatively rotatable to the button 480 by the designated angle. When the change from the first state to the second state of the first locking structure 450 is completed, the at least one third guiding part 484 and the other end 434b of the at least one fourth guiding part 434 may be in contact with each other.

According to an embodiment, when the state of the first locking structure 450 is the second state, the at least one third guiding part 484 may be in contact with the other end 434b of the at least one fourth guiding part 434. When the state of the first locking structure 450 is the second state, while the adjusting member 430 is rotated in the second rotational direction r2, the at least one third guiding part 484 may maintain a state of being in contact with the other end 434b of the at least one fourth guiding part 434. Since the other end 434b of the at least one fourth guiding part 434 is in contact with the at least one third guiding part 484 in the second state, the force from the adjusting member 430 may be transmitted to the button 480 through the at least one third guiding part 484 and the at least one fourth guiding part 434. As the force from the adjusting member 430 is transmitted to the button 480, the adjusting member 430 and the button 480 may be rotatable together in the second rotational direction r2 in the second state of the first locking structure 450.

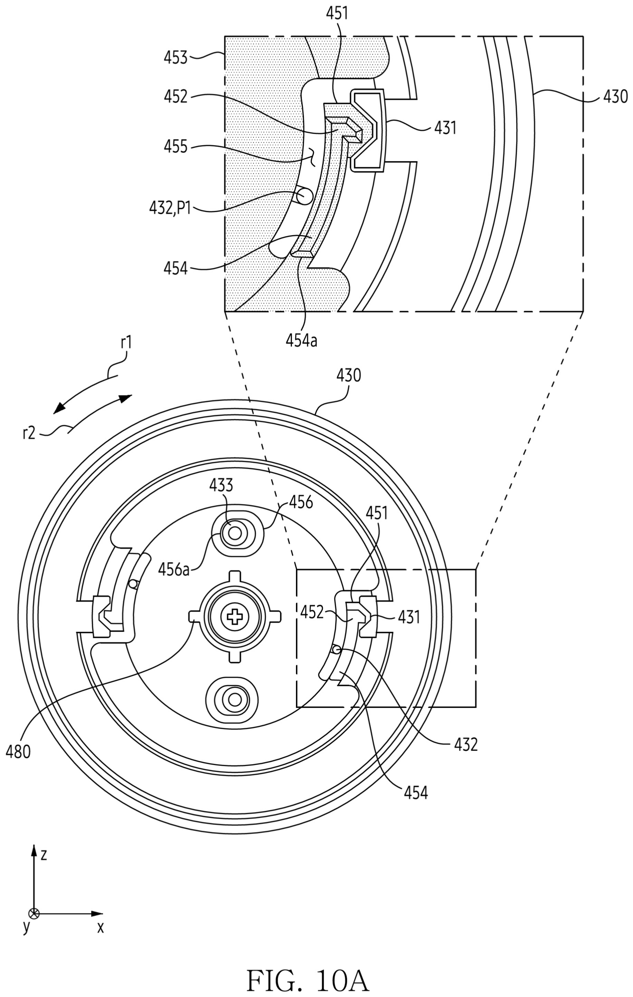

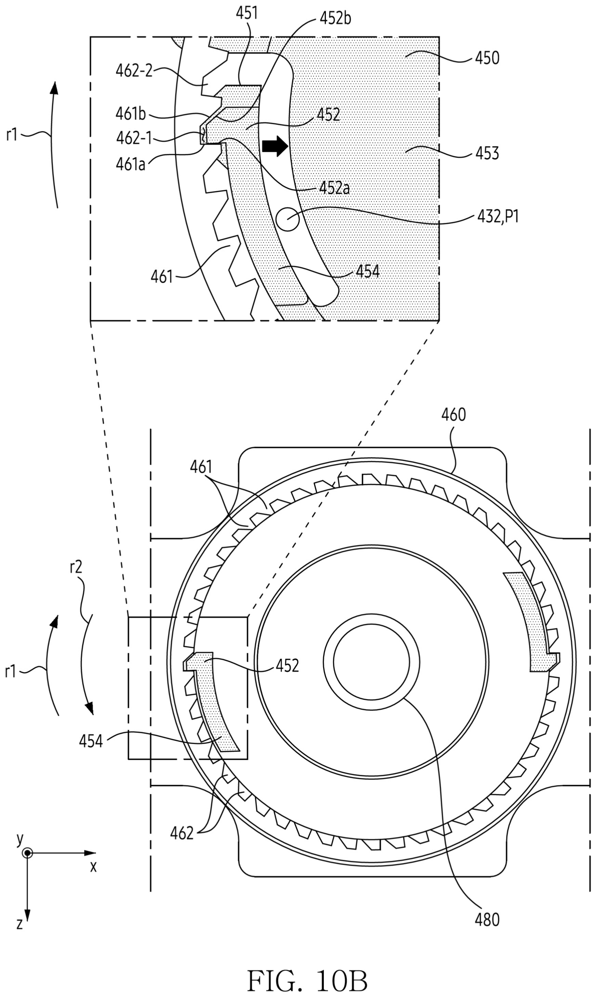

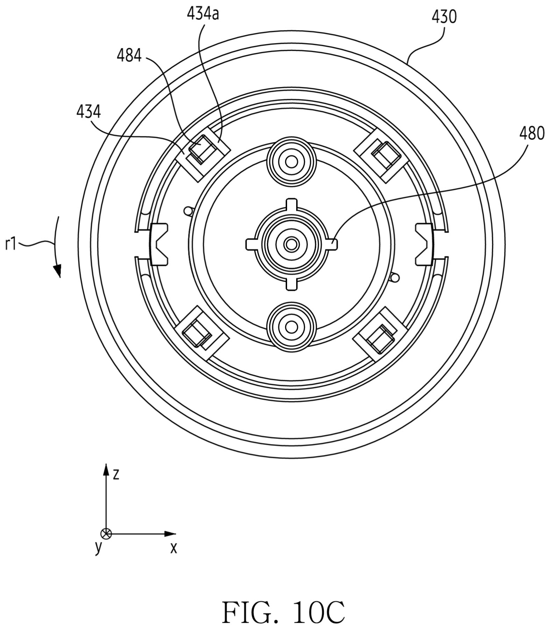

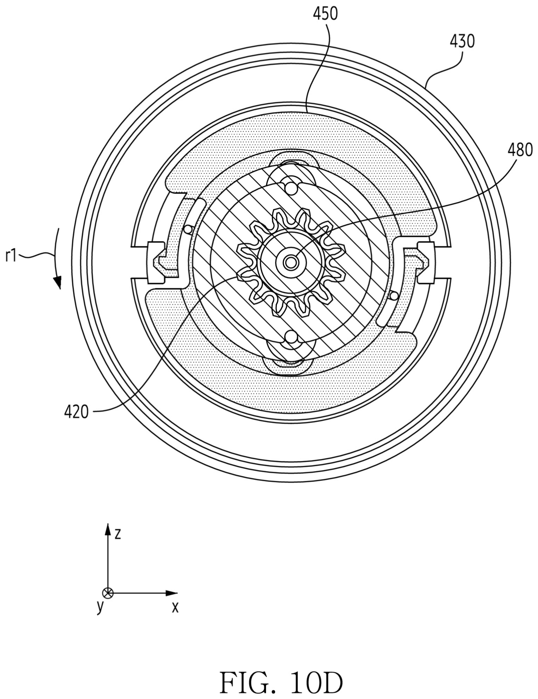

FIG. 10A is a top view indicating a relationship between a first locking structure and an adjusting member when a state of an exemplary first locking structure according to an embodiment is a first state, FIG. 10B is a top view indicating a relationship between a first locking structure and a second locking structure when a state of an exemplary first locking structure according to an embodiment is a first state, FIG. 10C is a top view indicating a relationship between an adjusting member and a button when a state of an exemplary first locking structure according to an embodiment is a first state, and FIG. 10D is a top view of a first adjusting module when a state of an exemplary first locking structure according to an embodiment is a first state.

Referring to FIG. 10A, according to an embodiment, a position of at least one adjusting protrusion 432 of an adjusting member 430 in a first state of a first locking structure 450 may be a first position p1 within a groove 455. The first position p1 of the at least one adjusting protrusion 432 in the first state of the first locking structure 450 may be closer (or more adjacent) to at least one first locking part 451 than in a second state of the first locking structure 450. For example, when a state of the first locking structure 450 is the first state, a distance between the at least one adjusting protrusion 432 and one end 454a of a connecting part 454 connected to a flange part 453 may be closer than a distance between the at least one adjusting protrusion 432 and the one end 454a of the connecting part 454 when the state of the first locking structure 450 is the second state. As the at least one adjusting protrusion 432 is positioned relatively adjacent to the at least one first locking part 451 in the first state of the first locking structure 450, a force required for deformation of the connecting part 454 in the first state of the first locking structure 450 may be larger than in the second state of the first locking structure 450.

According to an embodiment, as the adjusting member 430 rotates in a first rotational direction r1 while the state of the first locking structure 450 is the first state, at least one first guiding part 433 may rotate in the first rotational direction r1. Since the at least one first guiding part 433 and one end 456a of a second guiding part 456 is in contact with each other while the state of the first locking structure 450 is the first state, the second guiding part 456 may rotate in conjunction with the at least one first guiding part 433 in the first rotational direction r1.

Referring to FIG. 10B, while the state of the first locking structure 450 is the first state, the at least one first locking part 451 and a second locking part 452 may be movable in a direction close to the flange part 453 or in a direction away from the flange part 453. While the state of the first locking structure 450 is the first state, the at least one first locking part 451 and the second locking part 452 may move in a direction away from or in a direction close to a second locking structure 460. The at least one second locking part 452 may move from a groove 462-1 of a plurality of first locking grooves 462 to another groove 462-2 of the plurality of first locking grooves 462 by rotation of the first locking structure 450 in the first rotational direction r1. For example, while the state of the first locking structure 450 is the first state, as the first locking structure 450 rotates in the first rotational direction r1, a first sliding surface 452b of the at least one second locking part 452 may slide with respect to a second sliding surface 461b of a protrusion 461-1 of a plurality of first locking protrusions 461. As the first sliding surface 452b and the second sliding surface 461b slide, the at least one second locking part 452 may move in the direction close to the flange part 453 in conjunction with the at least one first locking part 451. As the first sliding surface 452b and the second sliding surface 461b slide, the connecting part 454 connected to the at least one second locking part 452 may move in the direction close to the flange part 453. The at least one second locking part 452 may move to the outside of the groove 462-1 of the plurality of first locking grooves 462 as the connecting part 454 is deformed in the direction close to the flange part 453. The at least one second locking part 452 moved to the outside of the groove 462-1 of the plurality of first locking grooves 462 may move toward the other groove 462-2 of the plurality of first locking grooves 462 by the rotation of the first locking structure 450 in the first rotational direction r1. While the at least one second locking part 452 moves toward the other groove 462-2 of the plurality of first locking grooves 462, through the connecting part 454, as the force in the direction away from the flange part 453 is applied to the at least one second locking part 452, the at least one second locking part 452 may be accommodated in the other groove 462-2 of the plurality of first locking grooves 462. The at least one second locking part 452 may be engaged with the plurality of first locking protrusions 461 by moving into the other groove 462-2 of the plurality of first locking grooves 462 by the rotation of the first locking structure 450 in the first rotational direction r1.

According to an embodiment, while the state of the first locking structure 450 is the first state, rotation of the first locking structure 450 in the second rotational direction r2 may be limited by contact between a first contact surface 452a of the at least one second locking part 452 and a second contact surface 461a of each of the plurality of first locking protrusions 461.

According to an embodiment, the at least one adjusting protrusion 432 may be positioned at the first position p1 so that a relatively large force is required for the deformation of the connecting part 454 while the state of the first locking structure 450 is the first state. For example, referring back to FIG. 10A, while the state of the first locking structure 450 is the first state, in a case that the at least one adjusting protrusion 432 is accommodated in another position in the groove 455 close to the one end 454a of the connecting part 454, the force required for the deformation of the connecting part 454 may be decreased than when the position of the at least one adjusting protrusion 432 is the first position p1. In a case that the connecting part 454 may be relatively easily changed, the engagement between the at least one second locking part 452 and the plurality of first locking protrusions 461 may be released by moving the connecting part 454 so as to be close to the flange part 453 by a relatively small force while the state of the first locking structure 450 is the first state. For example, the relatively small force may indicate an external force transmitted to the adjusting member 430 or the first locking structure 450 while there is no user manipulation through the adjusting member 430. In a case that the engagement between the at least one second locking part 452 and the plurality of first locking protrusions 461 is released by the relatively small force, a distance between a first housing (e.g., the first housing 210 of FIGS. 2A, 2B, and 2C) and a second housing (e.g., the second housing 220 of FIGS. 2A, 2B, and 2C) may not be maintained. A first adjusting module 400 according to an embodiment may provide a structure capable of maintaining a distance between the first housing 210 and the second housing 220 while there is no external force of the user since the at least one adjusting protrusion 432 is positioned at the first position p1 so that the relatively large force is required for the deformation of the connecting part 454 while the state of the first locking structure 450 is the first state.

According to an embodiment, while the first locking structure 450 rotates in the first rotational direction r1, the button 480 may rotate in the first rotational direction r1 in conjunction with the adjusting member 430. For example, referring to FIG. 10C, as the adjusting member 430 rotates in the first rotational direction r1 while the state of the first locking structure 450 is the first state, at least one fourth guiding part 434 may rotate in the first rotational direction r1. Since at least one third guiding part 484 and one end 434a of the at least one fourth guiding part 434 are in contact with each other while the state of the first locking structure 450 is the first state, the at least one third guiding part 484 may rotate in the first rotational direction r1 in conjunction with the at least one fourth guiding part 434. While the state of the first locking structure 450 is the first state, the button 480 may rotate in the first rotational direction r1 by the at least one fourth guiding part 434 in contact with the at least one third guiding part 484 and rotating in the first rotational direction r1.

Referring to FIG. 10D, according to an embodiment, in a case that the button 480 rotates in conjunction with the adjusting member 430 in the first rotational direction r1 while the state of the first locking structure 450 is the first state, the rotating member 420 may rotate in conjunction with the button 480 in the first rotational direction r1. By the rotation of the rotating member 420 in the first rotational direction r1, the distance between the first housing 210 and the second housing 220 may be changed from a first distance (e.g., the first distance d1 of FIG. 4A) to a second distance (e.g., the second distance d2 of FIG. 4A).

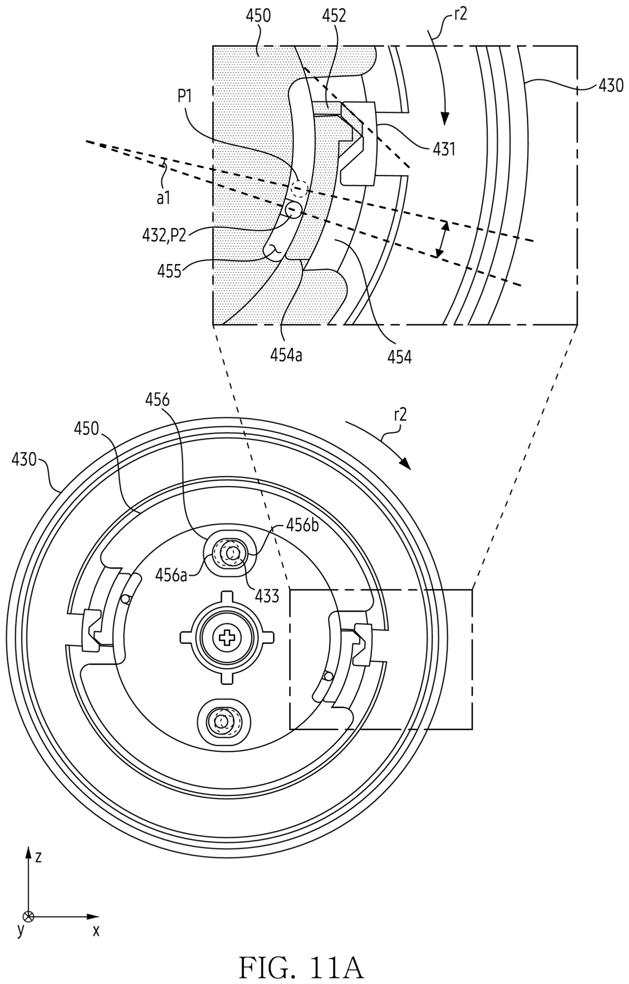

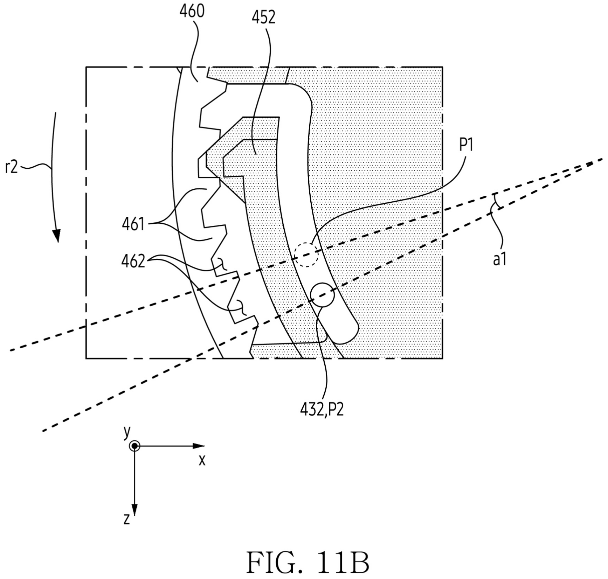

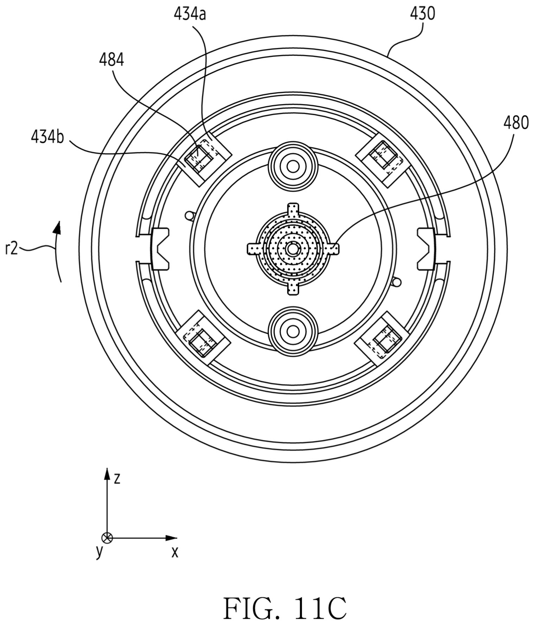

FIG. 11A is a top view indicating a relationship between a first locking structure and an adjusting member while a state of an exemplary first locking structure according to an embodiment is changed from a first state to a second state, FIG. 11B is a top view indicating a relationship between a first locking structure and a second locking structure while a state of an exemplary first locking structure according to an embodiment is changed from a first state to a second state, and FIG. 11C is a top view indicating a relationship between an adjusting member and a button while a state of an exemplary first locking structure according to an embodiment is changed from a first state to a second state.

Referring to FIG. 11A, while a state of a first locking structure 450 is changed from the first state to the second state, an adjusting member 430 may be rotatable by a designated angle a1 in a second rotational direction r2 with respect to the first locking structure 450. While the adjusting member 430 rotates in the second rotational direction r2 with respect to the first locking structure 450 by the designated angle a1, at least one first guiding part 433 may move from one end 456a toward the other end 456b of a second guiding part 456. While the at least one first guiding part 433 moves from the one end 456a toward the other end 456b of the second guiding part 456, since the at least one first guiding part 433 and the second guiding part 456 are not in contact with each other, the first locking structure 450 may not rotate by the rotation of the adjusting member 430.

According to an embodiment, as the adjusting member 430 rotates in the second rotational direction r2 with respect to the first locking structure 450 by the designated angle a1, at least one adjusting protrusion 432 may rotate in the second rotational direction r2 with respect to the first locking structure 450 within a groove 455 by the designated angle a1. The at least one adjusting protrusion 432 may move away from at least one first locking part 451 and at least one second locking part 452 by rotating in the second rotational direction r2 with respect to the first locking structure 450 by the designated angle a1. The at least one adjusting protrusion 432 may move toward one end 454a of a connecting part 454 by rotating in the second rotational direction r2 with respect to the first locking structure 450 by the designated angle a1. While the adjusting member 430 rotates in the second rotational direction r2 with respect to the first locking structure 450 by the designated angle a1, the at least one adjusting protrusion 432 may move from a first position p1 toward a second position p2. As the at least one adjusting protrusion 432 moves away from the at least one first locking part 451 and the at least one second locking part 452, magnitude of a force required for movement of the at least one first locking part 451 and the at least one second locking part 452 may be decreased.

According to an embodiment, as the adjusting member 430 rotates in the second rotational direction r2 with respect to the first locking structure 450 by the designated angle a1, at least one first coupling part 431 may rotate in the second rotational direction r2 with respect to the at least one first locking part 451 by the designated angle a1. For example, as the adjusting member 430 rotates in the second rotational direction r2 by the designated angle a1, the at least one first locking part 451 may slide with respect to the at least one first coupling part 431. The at least one first locking part 451 may move in a direction close to a flange part 453 while sliding with respect to the at least one first coupling part 431. For example, while the at least one first locking part 451 slides with respect to the at least one first coupling part 431, the connecting part 454 may move in the direction close to the flange part 453.

Referring to FIG. 10B, according to an embodiment, while the adjusting member 430 rotates in the second rotational direction r2 with respect to the first locking structure 450 by the designated angle a1, the at least one second locking part 452 may move away from a second locking structure 460 as the connecting part 454 moves in the direction close to the flange part 453. For example, while the adjusting member 430 rotates in the second rotational direction r2 with respect to the first locking structure 450 by the designated angle a1, the at least one second locking part 452 may move away from a plurality of first locking protrusions 461 and/or a plurality of first locking grooves 462. As the adjusting member 430 rotates in the second rotational direction r2 with respect to the first locking structure 450 by the designated angle a1, an engagement between the at least one second locking part 452 and the plurality of first locking protrusions 461 may be released.

According to an embodiment, a distance between a first housing (e.g., the first housing 210 of FIGS. 2A, 2B, and 2C) and a second housing (e.g., the second housing 220 of FIGS. 2A, 2B, and 2C) may be maintained while the adjusting member 430 rotates in the second rotational direction r2 with respect to the first locking structure 450 by the designated angle a1. For example, referring to FIG. 10C, while the state of the first locking structure 450 is changed from the first state to the second state, the adjusting member 430 may rotate in the second rotational direction r2 with respect to the button 480 by the designated angle a1. While the adjusting member 430 rotates in the second rotational direction r2 with respect to the button 480 by the designated angle a1, at least one third guiding part 484 may move from one end 434a toward the other end 434b of at least one fourth guiding part 434. While the at least one third guiding part 484 moves from the one end 434a toward the other end 434b of the at least one fourth guiding part 434, since the at least one third guiding part 484 and the at least one fourth guiding part 434 are not in contact with each other, the button 480 may not rotate by the rotation of the adjusting member 430.

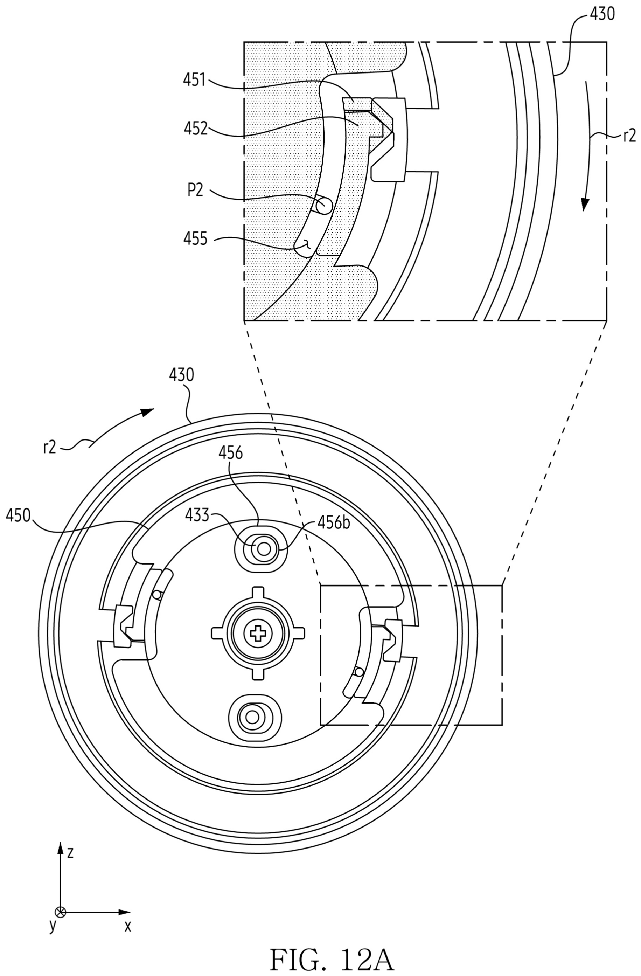

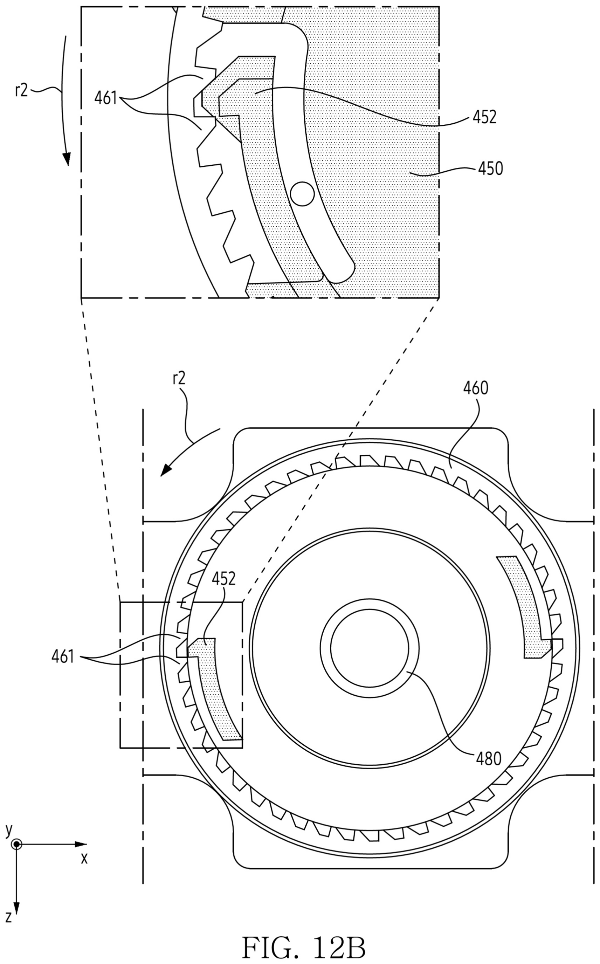

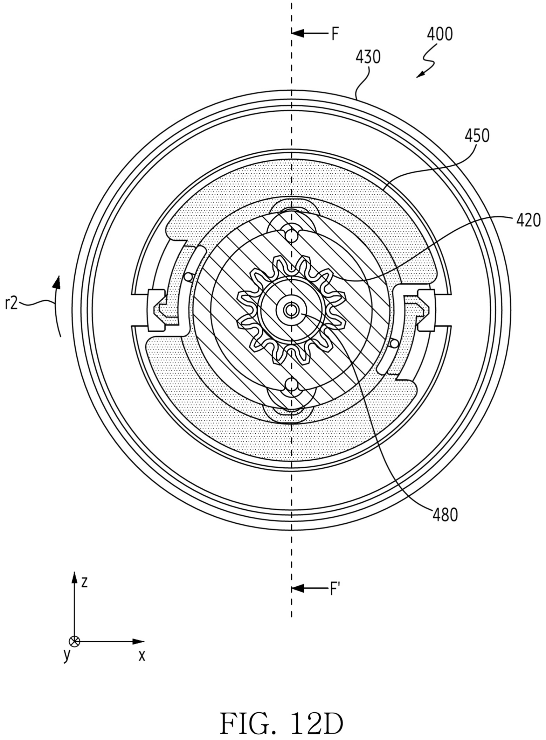

FIG. 12A is a top view indicating a relationship between a first locking structure and an adjusting member when a state of an exemplary first locking structure according to an embodiment is a second state, FIG. 12B is a top view indicating a relationship between a first locking structure and a second locking structure when a state of an exemplary first locking structure according to an embodiment is a second state, FIG. 12B is a top view indicating a relationship between an adjusting member and a button when a state of an exemplary first locking structure according to an embodiment is a second state, and FIG. 12D is a top view of a first adjusting module when a state of an exemplary first locking structure according to an embodiment is a second state.

Referring to FIG. 12A, according to an embodiment, a position of at least one adjusting protrusion 432 of an adjusting member 430 in a second state of a first locking structure 450 may be a second position p2 within a groove 455. The second position p2 of the at least one adjusting protrusion 432 in the second state of the first locking structure 450 may be farther from at least one first locking part 451 than in a first state of the first locking structure 450. As the at least one adjusting protrusion 432 is positioned relatively far from the at least one first locking part 451 in the second state of the first locking structure 450, a force required for deformation of a connecting part 454 in the second state of the first locking structure 450 may become smaller than in the first state of the first locking structure 450.

According to an embodiment, as the adjusting member 430 rotates in a second rotational direction r2 while a state of the first locking structure 450 is the second state, at least one first guiding part 433 may rotate in the second rotational direction r2. Since the at least one first guiding part 433 and the other end 456b of a second guiding part 456 are in contact with each other while the state of the first locking structure 450 is the second state, the second guiding part 456 may rotate in the second rotational direction r2 in conjunction with the at least one first guiding part 433.

Referring to FIG. 12B, an engagement between at least one second locking part 452 and a plurality of first locking protrusions 461 may be released while the state of the first locking structure 450 is the second state. As the engagement between the at least one second locking part 452 and the plurality of first locking protrusions 461 is released, a second locking structure 460 may rotate in the second rotational direction r2 by the adjusting member 430 while the state of the first locking structure 450 is the second state.

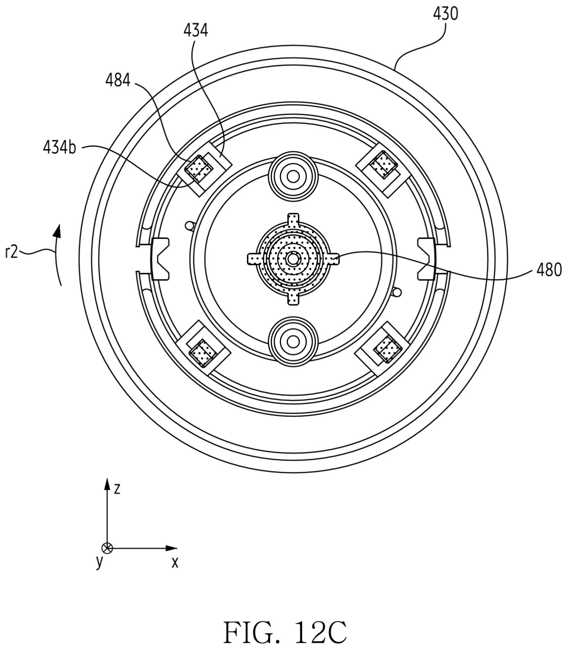

According to an embodiment, while the first locking structure 450 rotates in the second rotational direction r2, a button 480 may rotate in the second rotational direction r2 in conjunction with the adjusting member 430. Referring to FIG. 12C, for example, as the adjusting member 430 rotates in the second rotational direction r2, while the state of the first locking structure 450 is the second state, at least one fourth guiding part 434 may rotate in the second rotational direction r2. Since at least one third guiding part 484 and the other end 434b of the at least one fourth guiding part 434 are in contact with each other while the state of the first locking structure 450 is the second state, the at least one third guiding part 484 may rotate in the second rotational direction r2 in conjunction with the at least one fourth guiding part 434. While the state of the first locking structure 450 is the second state, the button 480 may rotate in the second rotational direction r2 by the at least one fourth guiding part 434 in contact with the at least one third guiding part 484, and rotating in the second rotational direction r2.

Referring to FIG. 12D, according to an embodiment, in a case that the button 480 rotates in the second rotational direction r2 in conjunction with the adjusting member 430 while the state of the first locking structure 450 is the second state, a rotating member 420 may rotate in the second rotational direction r2 in conjunction with the button 480. By the rotation of the rotating member 420 in the second rotational direction r2, a distance between a first housing 210 and a second housing 220 may be changed from a second distance (e.g., the second distance d2 of FIG. 4A) to a first distance (e.g., the first distance d1 of FIG. 4A).

According to an embodiment, when an external force for rotating the adjusting member 430 in the second rotational direction r2 is removed, the state of the first locking structure 450 may be changed (or restored) from the second state to the first state. Referring back to FIG. 12A, when the external force for rotating the adjusting member 430 in the second rotational direction r2 is removed, the connecting part 454 may move in a direction away from a flange part 453 by a restoring force. In a case that the connecting part 454 moves in the direction away from the flange part 453 by the restoring force in a state that the external force for rotating the adjusting member 430 in the second rotational direction r2 is removed, the at least one first locking part 451 may move toward the inside of at least one first coupling part 431. As the at least one first locking part 451 moves toward the at least one first coupling part 431 in the state that the external force for rotating the adjusting member 430 in the second rotational direction r2 is removed, the at least one first locking part 451 and the at least one first coupling part 431 may be fully engaged with each other again. As the at least one first locking part 451 and the at least one first coupling part 431 are fully engaged with each other again in the state that the external force for rotating the adjusting member 430 in the second rotational direction r2 is removed, the state of the first locking structure 450 may be restored from the second state to the first state. In the state that the external force for rotating the adjusting member 430 in the second rotational direction r2 is removed, the distance between the first housing 210 and the second housing 220 may be maintained as the at least one second locking part 452 and the plurality of first locking protrusions 461 are engaged with each other again.

As described above, a first adjusting module 400 according to an embodiment may provide a structure in which a user may conveniently change the distance between the first housing 210 and the second housing 220 since the state of the first locking structure 450 may be changed by a force that rotates the adjusting member 430 in different rotational directions. On the other hand, due to limitation of a rotation angle of the user's wrist, the external force from the user for rotating the adjusting member 430 in the second rotational direction r2 may be intermittently provided to the adjusting member 430. Since the external force for rotating the adjusting member 430 in the second rotational direction r2 is intermittently provided to the adjusting member 430, the state of the first locking structure 450 may be restored from the second state to the first state regardless of the user's intention while the user changes the distance between the first housing 210 and the second housing 220 from the second distance d2 to the first distance d1. Hereinafter, a mechanism capable of changing the distance between the first housing 210 and the second housing 220 independently of the state of the first locking structure 450 will be described.

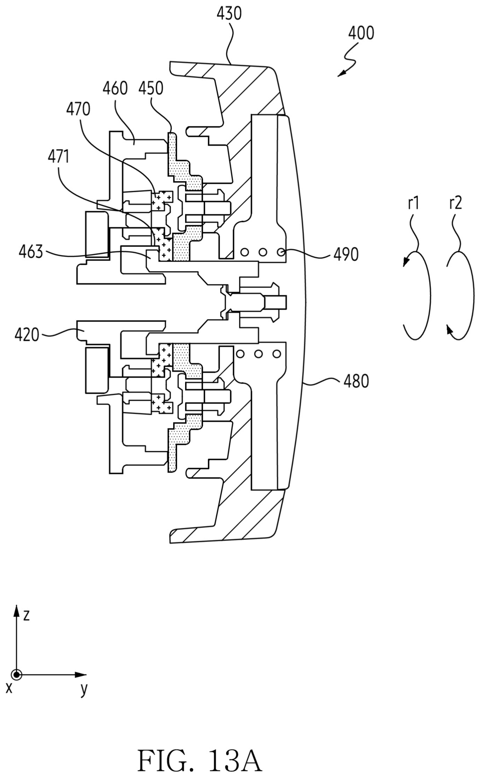

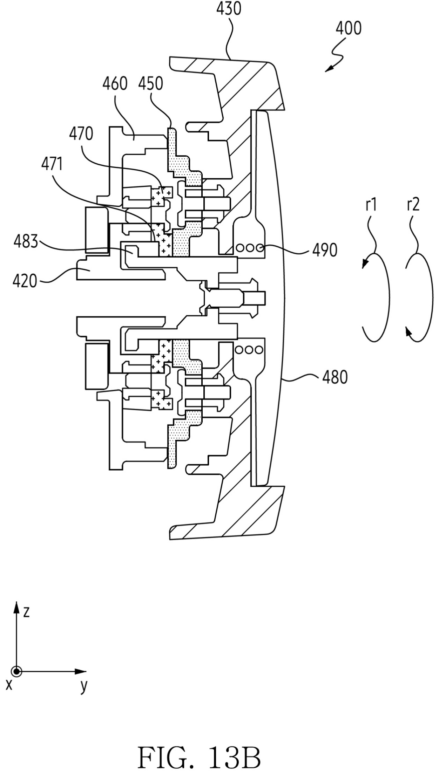

FIG. 13A is a cross-sectional view illustrating an example in which a first adjusting module according to an embodiment is cut along line F-F' of FIG. 12D and FIG. 13B is a cross-sectional view illustrating a released state of a first adjusting module according to an embodiment.

FIG. 13A may indicate a cross-section of a first adjusting module 400 when a state of a third locking structure 470 is an engaged state, and FIG. 13B may indicate a cross-section of the first adjusting module 400 when the state of the third locking structure 470 is a released state.

Referring to FIG. 13A, according to an embodiment, when the state of the third locking structure 470 is the engaged state, at least one third locking part 483 of a button 480 may be engaged with a plurality of second locking protrusions 471 of the third locking structure 470. As the at least one third locking part 483 and the plurality of second locking protrusions 471 are engaged with each other, when the state of the third locking structure 470 is the engaged state, a rotating member 420 may rotate in conjunction with the button 480 as the button 480 is rotated by an adjusting member 430. For example, a force transmitted from the adjusting member 430 may rotate the at least one third locking part 483. The force from the adjusting member 430 may be transmitted to the plurality of second locking protrusions 471 engaged with the at least one third locking part 483 through the at least one third locking part 483. The force from the adjusting member 430 transmitted to the plurality of second locking protrusions 471 may rotate the third locking structure 470 and the rotating member 420 coupled to the third locking structure 470. For example, when the state of the third locking structure 470 is the engaged state, the button 480 may be rotatable in conjunction with the rotating member 420 as it moves in a first rotational direction r1 and/or a second rotational direction r2 by the force transmitted from the adjusting member 430.

According to an embodiment, the state of the third locking structure 470 may be changed by the movement of the button 480 with respect to the adjusting member 430. For example, the state of the third locking structure 470 may be changed from the engaged state to the released state by the movement of the button 480 with respect to the adjusting member 430 in a first direction (e.g., a -y direction).

Referring to FIG. 13B, according to an embodiment, when the state of the third locking structure 470 is the released state, the engagement between the at least one third locking part 483 and the plurality of second locking protrusions 471 may be released. When the state of the third locking structure 470 is the released state, as the engagement between the at least one third locking part 483 and the plurality of second locking protrusions 471 is released, the third locking structure 470 and the rotating member 420 coupled to the third locking structure 470 may rotate with respect to other components of the first adjusting module 400. For example, when the state of the third locking structure 470 is the released state, the rotating member 420 and the third locking structure 470 may be rotatable independently to the adjusting member 430, a first locking structure 450, a second locking structure 460, and/or the button 480. When the state of the third locking structure 470 is the released state, since the rotating member 420 and the third locking structure 470 are independently rotatable, a user may easily adjust a distance between a first housing (e.g., the first housing 210 of FIGS. 2A, 2B, and 2C) and a second housing (e.g., the second housing 220 of FIGS. 2A, 2B, and 2C). For example, when the state of the third locking structure 470 is the released state, the rotating member 420 and the third locking structure 470 may be rotatable in the second rotational direction r2. For example, when the state of the third locking structure 470 is the released state, the rotating member 420 and the third locking structure 470 may be rotatable in the second rotational direction r2 by their own weight. For example, when the state of the third locking structure 470 is the released state, the rotating member 420 and the third locking structure 470 may be rotatable in the second rotational direction r2 by the user's force pulling the first housing 210 in a direction away from the second housing 220. When the state of the third locking structure 470 is the released state, since the rotating member 420 and the third locking structure 470 are rotatable in the second rotational direction r2, the distance between the first housing 210 and the second housing 220 may be changed from a second distance d2 to a first distance d1.

According to an embodiment, a deforming member 490 may move the button 480 in a second direction (e.g., a +y direction). As the button 480 moves in the second direction (e.g., the +y direction) by the deforming member 490, the state of the third locking structure 470 may be changed from the released state to the engaged state.

As described above, the first adjusting module 400 according to an embodiment may provide a structure that may easily change the distance between the first housing 210 and the second housing 220 since it may change the state of the third locking structure 470 by moving the button 480 with respect to the adjusting member 430.

An electronic device may include housings movable with respect to each other to correspond to a body shape of the user's body. The electronic device may include an adjusting member rotatable with respect to some of the housings to adjust a distance between the housings. For intuitive manipulation, the adjusting member may be designed to reversely adjust the distance between the housings according to rotational directions. Since a size of the electronic device may be increased as a space in the electronic device occupied by a mechanism of the adjusting member increases, the electronic device may need a structure that may be easily operated by the user and may save the space in the electronic device.

An electronic device (e.g., the electronic device 101 of FIG. 4A) is provided. According to an embodiment, the electronic device may include a first housing (e.g., the first housing 210 of FIG. 4A). According to an embodiment, the electronic device may include a second housing (e.g., the second housing 220 of FIG. 4A). According to an embodiment, the electronic device may include a plurality of moving members (e.g., the plurality of moving members 410 of FIGS. 4B and 4C) movably coupling the first housing to the second housing. According to an embodiment, the electronic device may include a rotating member (e.g., the rotating member 420 of FIGS. 4B and 4C) engaged with each of the plurality of moving members and configured to adjust a distance between the first housing and the second housing by rotating relative to the second housing. According to an embodiment, the electronic device may include an adjusting member (e.g., the adjusting member 430 of FIGS. 4A, 4B, and 4C) including a first coupling part (e.g., the at least one first coupling part 431 of FIGS. 6A, 6B, and 6C) and rotatable in conjunction with the rotating member in a first rotational direction and a second rotational direction opposite to the first rotational direction. According to an embodiment, the electronic device may include a first locking structure (e.g., the first locking structure 450 of FIGS. 6A, 6B, and 6D) rotatable in conjunction with the adjusting member, the first locking structure including a flange part (e.g., the flange part 453 of FIGS. 6A, 6B, and 6D) disposed between the adjusting member and the rotating member, a first locking part (e.g., the at least one first locking part 451 of FIGS. 6A, 6B, and 6D), configured to be engaged with the first coupling part, movable with respect to the flange part, and a second locking part (e.g., the at least one second locking part 452 of FIGS. 6A, 6B, and 6D) movable in conjunction with the first locking part. According to an embodiment, the electronic device may include a second locking structure (e.g., the second locking structure 460 of FIGS. 7A, 7B, and 7C) fastened in the second housing and including a plurality of first locking protrusions (e.g., the plurality of first locking protrusions 461 of FIGS. 7A and 7C) configured to be engaged with the second locking part. According to an embodiment, the adjusting member may be configured to change, when a state of the first locking structure is a first state in which the second locking part is engaged with the plurality of first locking protrusions, the distance from a first distance to a second distance by rotating in the first rotational direction with the first locking structure and the rotating member. According to an embodiment, the adjusting member may be configured to change the state from the first state to a second state in which an engagement between the second locking part and the plurality of first locking protrusions is released, by rotating relatively in the second rotational direction to the first locking structure for a designated angle so that the first locking part moves relatively to the first coupling part. According to an embodiment, the adjusting member may be configured to change the distance, when the state is the second state, from the second distance to the first distance, by rotating in the second rotational direction with the rotating member.

The electronic device according to an embodiment may provide a structure that is easy for a user to operate as the state of the first locking structure is changed by the rotation of the adjusting member.

According to an embodiment, the plurality of first locking protrusions may be configured to limit the rotation of the first locking structure and the adjusting member in the second rotational direction, in the first state, by having a shape for limiting the rotation of the second locking part in the second rotational direction.

The electronic device according to an embodiment may provide a structure capable of limiting the rotation of the first locking structure in the first rotational direction when the first locking structure is in the first state by the plurality of first locking protrusions.

According to an embodiment, the second locking part may include a first contact surface (e.g., the first contact surface 452a of FIG. 7C) having a shape parallel to a radial direction of the adjusting member. According to an embodiment, the second locking part may include a first sliding surface (e.g., the first sliding surface 452b of FIG. 7C) inclined with respect to the first contact surface. According to an embodiment, each of the plurality of first locking protrusions may include a second contact surface (e.g., the second contact surface 461a of FIG. 7C) parallel to the first contact surface. According to an embodiment, each of the plurality of first locking protrusions may include a second sliding surface (e.g., the second sliding surface 461b of FIG. 7C) parallel to the first sliding surface. According to an embodiment, the first sliding surface may be configured to guide the rotation of the second locking part with respect to the second locking structure in the first rotational direction, as sliding with respect to the second sliding surface in the first state. According to an embodiment, the first contact surface may be configured to limit the rotation of the second locking part in the second rotational direction by contacting the second contact surface in the first state.

The electronic device according to an embodiment may provide a structure capable of maintaining the distance between the first housing and the second housing since the rotation of the first locking structure in the first rotational direction is limited when the first locking structure is in the first state by the plurality of first locking protrusions.

According to an embodiment, the distance may be maintained at the first distance, as the adjusting member rotates relatively to the rotating member, while the state is changed from the first state to the second state.

The electronic device according to an embodiment may provide a structure in which the user may intuitively adjust the distance between the first housing and the second housing since the distance between the first housing and the second housing is maintained while the state of the first locking structure is changed by the adjusting member.

According to an embodiment, a contact area between the first locking part and the first coupling part may be smaller in the second state than in the first state.

According to an embodiment, the first locking structure may include a connecting part (e.g., the connecting part 454 of FIGS. 7A and 7C) connecting the first locking part and the second locking part to the flange part and deformable with respect to the flange part. According to an embodiment, the first locking structure may include a groove (e.g., the groove 455 of FIG. 7A) disposed between the flange part and the connecting part. According to an embodiment, the adjusting member may include an adjusting protrusion (e.g., the at least one adjusting protrusion 432 of FIGS. 6A, 6B, 6C, and 6D) movable within the groove and in contact with the connecting part within the groove. According to an embodiment, the adjusting protrusion may move away from the second locking part by moving within the groove while the state is changed from the first state to the second state, so that a force required for deformation of the connecting part in the second state is less than that in the first state.

The electronic device according to an embodiment may provide a structure capable of maintaining the distance between the first housing and the second housing while there is no user manipulation since a force required for movement of the first locking part and the second locking part is changed according to a position of the adjusting protrusion.

According to an embodiment, the adjusting member may include a first guiding part (e.g., the at least one first guiding part 433 of FIGS. 6A, 6B, 6C, and 6D) extending toward the first locking structure. According to an embodiment, the first locking structure may include a second guiding part (e.g., the second guiding part 456 of FIGS. 6A, 6B, 6C, and 6D) surrounding the first guiding part. According to an embodiment, the first guiding part may be configured to transmit, when the state is the first state, a force from the adjusting member for rotating the first locking structure in the first rotational direction to the first locking structure through the second guiding part, by contacting one end of the second guiding part. According to an embodiment, the first guiding part may be configured to move, while the state is changed from the first state to the second state, from the one end of the second guiding part to the other end of the second guiding part opposite to the one end of the second guiding part, by the rotation of the adjusting member in the second rotational direction. According to an embodiment, the first guiding part may be configured to transmit, when the state is the second state, a force from the adjusting member for rotating the first locking structure in the second rotational direction to the first locking structure through the second guiding part, by contacting the other end of the second guiding part.

The electronic device according to an embodiment may provide a structure in which the first locking structure may rotate together by the rotation of the adjusting member through the contact between the first guiding part and the second guiding part.

According to an embodiment, the electronic device may further include a fastening member coupling the first locking structure to the adjusting member by penetrating the first guiding part and having a cross-sectional area larger than a cross-sectional area of the second guiding part.

According to an embodiment, a size of the second guiding part may be larger than a size of the first guiding part.

According to an embodiment, the electronic device may include a third locking structure (e.g., the third locking structure 470 of FIG. 5A) including a plurality of second locking protrusions (e.g., the plurality of second locking protrusions 471 of FIG. 8E), disposed between the rotating member and the first locking structure, and fastened to the rotating member. According to an embodiment, the electronic device may include a button (e.g., the button 480 of FIGS. 8B and 8C), movable with respect to the rotating member in a first direction close to the rotating member and a second direction away from the rotating member, including a third locking part (e.g., the at least one third locking part 483 of FIGS. 8C and 8D) configured to be engaged with the plurality of second locking protrusions. According to an embodiment, the button may be configured to rotate, when a state of the third locking structure is an engaged state, as the third locking part and the plurality of second locking protrusion are engaged with each other, the rotating member by rotating by rotation of the adjusting member. According to an embodiment, the button may be configured to change the state of the third locking structure from the engaged state to a released state in which an engagement between the third locking part and the plurality of second locking protrusions is released, by moving with respect to the rotating member in the first direction. According to an embodiment, the rotating member may be configured to change the distance by rotating relatively to the button, in the released state of the third locking structure.

The electronic device according to an embodiment may provide a structure capable of adjusting the distance between the first housing and the second housing independently of the state of the first locking structure since the state of the third locking structure is changed by the movement of the button.

According to an embodiment, the button may include a third guiding part (e.g., the at least one third guiding part 484 of FIGS. 9A and 9B) extending in the first direction toward the adjusting member. According to an embodiment, the adjusting member may include a fourth guiding part (e.g., the at least one fourth guiding part 434 of FIGS. 9A and 9B) surrounding the third guiding part. According to an embodiment, the third guiding part may be configured to transmit, when the state is the first state, a force from the adjusting member for rotating the button in the first rotational direction to the button, by contacting one end of the fourth guiding part. According to an embodiment, the third guiding part may be configured to move, while the state is changed from the first state to the second state, from the one end of the fourth guiding part to the other end of the fourth guiding part opposite to the one end by rotation of the adjusting member in the second rotational direction. According to an embodiment, the third guiding part may be configured to transmit, when the state is the second state, a force from the adjusting member for rotating the button in the second rotational direction to the button by contacting the other end of the fourth guiding part.

The electronic device according to an embodiment may provide a structure in which the button and the rotating member may rotate by the rotation of the adjusting member through the contact between the third guiding part and the fourth guiding part.

According to an embodiment, the button may include an exposed part (e.g., the exposed part 481 of FIGS. 5A and 5B) exposed outside of the adjusting member. According to an embodiment, the button may include an extending part (e.g., the extending part 482 of FIGS. 5A and 5B) connecting the third locking part to the exposed part and penetrating the adjusting member by extending in the first direction from the exposed part.

The electronic device according to an embodiment may provide a structure capable of minimizing a space occupied by a first adjusting module since the extending part penetrates the adjusting member.

According to an embodiment, the electronic device may include a deforming member (e.g., the deforming member 490 of FIGS. 5A and 5B) disposed between the button and the adjusting member and configured to press the button in the second direction.

The electronic device according to an embodiment may provide a structure capable of restoring a position of the button by the deforming member pressing the button.

According to an embodiment, the first locking part may move away from the first coupling part by sliding with respect to the first coupling part, as the state is changed from the first state to the second state.

According to an embodiment, the first housing may cover a region of a body of a user including the user's eye while the electronic device is worn by the user. According to an embodiment, the second housing may cover another region of the body of the user including the user's back of the head while the electronic device is worn by the user.

According to an embodiment, the plurality of moving members may include a first rack gear (e.g., the first rack gear 411 of FIGS. 4B and 4C) and a second rack gear (e.g., the second rack gear 412 of FIGS. 4B and 4C). According to an embodiment, the rotating member may include a pinion gear disposed between the first rack gear and the second rack gear and engaged with the first rack gear and the second rack gear.

The electronic device according to an embodiment may provide a structure capable of adjusting the distance between the first housing and the second housing by the first rack gear and the second rack gear that may move linearly by rotation of the pinion gear.

A wearable device (e.g., the electronic device 101 of FIG. 4A) is provided. According to an embodiment, the wearable device may include a first housing (e.g., the first housing 210 of FIG. 4A). According to an embodiment, the wearable device may include a second housing (e.g., the second housing 220 of FIG. 4A). According to an embodiment, the wearable device may include a plurality of moving members (e.g., the plurality of moving members 410 of FIGS. 4B and 4C) movably coupling the first housing to the second housing. According to an embodiment, the wearable device may include a rotating member (e.g., the rotating member 420 of FIGS. 4B and 4C) engaged with each of the plurality of moving members and configured to adjust a distance between the first housing and the second housing by rotating relative to the second housing. According to an embodiment, the wearable device may include an adjusting member (e.g., the adjusting member 430 of FIGS. 4A, 4B, and 4C) including a first coupling part (e.g., the at least one first coupling part 431 of FIGS. 6A, 6B, and 6C) and rotatable in conjunction with the rotating member in a first rotational direction and a second rotational direction opposite to the first rotational direction. According to an embodiment, the wearable device may include a first locking structure (e.g., the at least one second locking part 452 of FIGS. 6A, 6B, and 6D) rotatable in conjunction with the adjusting member and including a flange part (e.g., the flange part 453 of FIGS. 6A, 6B, and 6D) disposed between the adjusting member and the rotating member, a first locking part (e.g., the at least one first locking part 451 of FIGS. 6A, 6B, and 6D), configured to be engaged with the first coupling part, movable with respect to the flange part, and a second locking part (e.g., the at least one second locking part 452 of FIGS. 6A, 6B, and 6D) movable in conjunction with the first locking part. According to an embodiment, the wearable device may include the second locking structure (e.g., the second locking structure 460 of FIGS. 7A, 7B, and 7C) including a plurality of first locking protrusions (e.g., the plurality of first locking protrusions 461 of FIGS. 7A and 7C) configured to be engaged with the second locking part and a plurality of first locking grooves (e.g., the plurality of first locking grooves 462 of FIGS. 7A, 7B, and 7C) and fastened in the second housing. According to an embodiment, the adjusting member may be configured to change, when a state of the first locking structure is a first state in which the second locking part is positioned in the plurality of first locking grooves, the distance from a first distance to a second distance by rotating in the first rotational direction with the first locking structure and the rotating member. According to an embodiment, the adjusting member may be configured to change the state from the first state to a second state in which the second locking part is positioned outside the plurality of first locking grooves, by rotating in the second rotational direction to the first locking structure for a designated angle so that the first locking part moves relatively to the first coupling part. According to an embodiment, the adjusting member may be configured to change the distance, when the state is the second state, from the second distance to the first distance, by rotating in the second rotational direction with the rotating member.

The electronic device according to an embodiment may provide a structure that is easy for the user to operate as the state of the first locking structure is changed by the rotation of the adjusting member.

According to an embodiment, the distance may be maintained at the first distance, as the adjusting member rotates relatively to the rotating member, while the state is changed from the first state to the second state.

The electronic device according to an embodiment may provide a structure in which the user may intuitively adjust the distance between the first housing and the second housing since the distance between the first housing and the second housing is maintained while the state of the first locking structure is changed by the adjusting member.

According to an embodiment, a contact area between the first locking part and the first coupling part may be smaller in the second state than in the first state.

According to an embodiment, the first locking structure may include a connecting part (e.g., the connecting part 454 of FIGS. 7A and 7C) connecting the first locking part and the second locking part to the flange part and deformable with respect to the flange part. According to an embodiment, the first locking structure may include a groove (e.g., the groove 455 of FIG. 7A) disposed between the flange part and the connecting part. According to an embodiment, the adjusting member may include an adjusting protrusion (e.g., the at least one adjusting protrusion 432 of FIGS. 6A, 6B, 6C, and 6D) movable within the groove and in contact with the connecting part within the groove. According to an embodiment, the adjusting protrusion may move away from the second locking part by moving within the groove while the state is changed from the first state to the second state, so that a force required for deformation of the connecting part in the second state is less than that in the first state.

The electronic device according to an embodiment may provide a structure capable of maintaining the distance between the first housing and the second housing while there is no user manipulation since the force required for the movement of the first locking part and the second locking part is changed according to a position of the adjusting protrusion.

According to an embodiment, the adjusting member may include a first guiding part (e.g., the at least one first guiding part 433 of FIGS. 6A, 6B, 6C, and 6D) extending toward the first locking structure. According to an embodiment, the first locking structure may include a second guiding part (e.g., the second guiding part 456 of FIGS. 6A, 6B, 6C, and 6D) surrounding the first guiding part. According to an embodiment, the first guiding part may be configured to transmit, when the state is the first state, a force from the adjusting member for rotating the first locking structure in the first rotational direction to the first locking structure through the second guiding part, by contacting one end of the second guiding part. According to an embodiment, the first guiding part may be configured to move, while the state is changed from the first state to the second state, from the one end of the second guiding part to the other end of the second guiding part opposite to the one end of the second guiding part, by the rotation of the adjusting member in the second rotational direction. According to an embodiment, the first guiding part may be configured to transmit, when the state is the second state, a force from the adjusting member for rotating the first locking structure in the second rotational direction to the first locking structure through the second guiding part, by contacting the other end of the second guiding part.

The electronic device according to an embodiment may provide a structure in which the first locking structure may rotate together by the rotation of the adjusting member through the contact between the first guiding part and the second guiding part.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a first housing (210);
a second housing (220);
a plurality of moving members (410) movably coupling the first housing (210) to the second housing (220);
a rotating member (420) engaged with each of the plurality of moving members (410) and configured to adjust a distance between the first housing (210) and the second housing (220) by rotating relative to the second housing (220);
an adjusting member(430) including a first coupling part (431) and rotatable in conjunction with the rotating member (420) in a first rotational direction and a second rotational direction opposite to the first rotational direction;
a first locking structure rotatable in conjunction with the adjusting member(430), the first locking structure including:
a flange part (453) disposed between the adjusting member(430) and the rotating member (420),
a first locking part (451), configured to be engaged with the first coupling part (431), movable with respect to the flange part (453), and
a second locking part (452) movable in conjunction with the first locking part (451); and
a second locking structure (460) fastened in the second housing (220) and including a plurality of first locking protrusions (461) configured to be engaged with the second locking part (452),
wherein the adjusting member(430) is configured to:
change, when a state of the first locking structure is a first state in which the second locking part (452) is engaged with the plurality of first locking protrusions (461), the distance from a first distance (d1) to a second distance (d2) by rotating in the first rotational direction with the first locking structure and the rotating member (420),
change the state of the first locking structure from the first state to a second state in which an engagement between the second locking part (452) and the plurality of first locking protrusions (461) is released, by rotating relatively in the second rotational direction to the first locking structure for a designated angle such that the first locking part (451) moves relatively to the first coupling part (431), and
change the distance, when the state is the second state, from the second distance (d2) to the first distance (d1), by rotating in the second rotational direction with the rotating member (420).

2. The electronic device (101) of claim 1,
wherein the plurality of first locking protrusions (461) are configured to limit the rotation of the first locking structure and the adjusting member(430) in the second rotational direction when the first locking structure is in the first state, by having a shape for limiting the rotation of the second locking part (452) in the second rotational direction.

3. The electronic device (101) of claim 2,
wherein the second locking part (452) includes:
a first contact surface (452a) having a shape parallel to a radial direction of the adjusting member(430), and
a first sliding surface (452b) inclined with respect to the first contact surface (452a);
wherein each of the plurality of first locking protrusions (461) includes:
a second contact surface (461a) parallel to the first contact surface (452a), and
a second sliding surface (461b) parallel to the first sliding surface (452b);
wherein the first sliding surface (452b) is configured to guide the rotation of the second locking part (452) with respect to the second locking structure (460) in the first rotational direction, as sliding with respect to the second sliding surface (461b) in the first state, and
wherein the first contact surface (452a) is configured to limit the rotation of the second locking part (452) in the second rotational direction by contacting the second contact surface (461a) in the first state.

4. The electronic device (101) of any one of claims 1 to 3,
wherein the distance is maintained at the first distance (d1), as the adjusting member(430) rotates relatively to the rotating member (420), while the state is changed from the first state to the second state.

5. The electronic device (101) of any one of claims 1 to 4,
wherein a contact area between the first locking part (451) and the first coupling part (431) is smaller in the second state than in the first state.

6. The electronic device (101) of any one of claims 1 to 5,
wherein the first locking structure includes:
a connecting part (454) connecting the first locking part (451) and the second locking part (452) to the flange part (453) and deformable with respect to the flange part (453); and
a groove (455) disposed between the flange part (453) and the connecting part (454),
wherein the adjusting member(430) includes at least one adjusting protrusion (432) movable within the groove (455) and in contact with the connecting part (454) within the groove (455), and
wherein the at least one adjusting protrusion (432) moves away from the second locking part (452) by moving within the groove (455) while the state is changed from the first state to the second state, such that a force required for deformation of the connecting part (454) in the second state is less than that in the first state.

7. The electronic device (101) of any one of claims 1 to 6,
wherein the adjusting member(430) includes a first guiding part (433) extending toward the first locking structure,
wherein the first locking structure includes a second guiding part (456) surrounding the first guiding part (433), and
wherein the first guiding part (433) is configured to:
transmit, when the state is the first state, a force from the adjusting member(430) for rotating the first locking structure in the first rotational direction to the first locking structure through the second guiding part (456), by contacting one end of the second guiding part (456),
move, while the state is changed from the first state to the second state, from the one end of the second guiding part (456) to the other end of the second guiding part (456) opposite to the one end of the second guiding part (456), by the rotation of the adjusting member(430) in the second rotational direction, and
transmit, when the state is the second state, a force from the adjusting member(430) for rotating the first locking structure in the second rotational direction to the first locking structure through the second guiding part (456), by contacting the other end of the second guiding part (456).

8. The electronic device (101) of claim 7,
wherein a size of the second guiding part (456) is larger than a size of the first guiding part (433).

9. The electronic device (101) of any one of claims 1 to 8, further comprising:
a third locking structure (470) including a plurality of second locking protrusions, disposed between the rotating member (420) and the first locking structure and fastened to the rotating member (420); and
a button (480), movable with respect to the rotating member (420) in a first direction close to the rotating member (420) and a second direction away from the rotating member (420), including a third locking part configured to be engaged with the plurality of second locking protrusions,
wherein the button (480) is configured to:
rotate, when a state of the third locking structure (470) is an engaged state, as the third locking part and the plurality of second locking protrusion are engaged with each other, the rotating member (420) by rotating by rotation of the adjusting member(430), and
change the state of the third locking structure (470) from the engaged state to a released state in which an engagement between the third locking part and the plurality of second locking protrusions is released, by moving with respect to the rotating member (420) in the first direction, and
wherein the rotating member (420) is configured to change the distance by rotating relatively to the button (480), in the released state of the third locking structure (470).

10. The electronic device (101) of claim 9,
wherein the button (480) includes a third guiding part (484) extending in the first direction toward the adjusting member(430),
wherein the adjusting member(430) includes a fourth guiding part surrounding the third guiding part (484), and
wherein the third guiding part (484) is configured to:
transmit, when the state is the first state, a force from the adjusting member(430) for rotating the button (480) in the first rotational direction to the button (480), by contacting one end of the fourth guiding part,
move, while the state is changed from the first state to the second state, from the one end of the fourth guiding part to the other end of the fourth guiding part opposite to the one end by rotation of the adjusting member(430) in the second rotational direction, and
transmit, when the state is the second state, a force from the adjusting member(430) for rotating the button (480) in the second rotational direction to the button (480) by contacting the other end of the fourth guiding part.

11. The electronic device (101) of claim 9,
wherein the button (480) includes:
an exposed part (481) exposed outside of the adjusting member(430); and
an extending part (482) connecting the third locking part to the exposed part (481) and penetrating the adjusting member(430) by extending in the first direction from the exposed part (481).

12. The electronic device (101) of claim 9, further comprising a deforming member (490) disposed between the button (480) and the adjusting member(430) and configured to press the button (480) in the second direction.

13. The electronic device (101) of any one of claims 1 to 12,
wherein the first locking part (451) moves away from the first coupling part (431) by sliding with respect to the first coupling part (431), as the state is changed from the first state to the second state.

14. The electronic device (101) of any one of claims 1 to 13,
wherein the first housing (210) covers a region of a body of a user including the user's eye while the electronic device (101) is worn by the user, and
wherein the second housing (220) covers another region of the body of the user including the user's back of the head while the electronic device (101) is worn by the user.

15. The electronic device (101) of any one of claims 1 to 14,
wherein the plurality of moving members (410) includes a first rack gear (411) and a second rack gear (412), and
wherein the rotating member (420) includes a pinion gear (421) disposed between the first rack gear (411) and the second rack gear (412) and engaged with the first rack gear (411) and the second rack gear (412).
